(19) Europäisches Patentamt
European Patent Office
Office européen des brevets

(11) Numéro de publication: **0 316 231 B1**

(12) **FASCICULE DE BREVET EUROPEEN**

(45) Date de publication de fascicule du brevet: **17.02.93** (51) Int. Cl.5: **H04N 5/14**, H04N 5/44

(21) Numéro de dépôt: **88402802.8**

(22) Date de dépôt: **07.11.88**

(54) **Procédé et dispositif de traitement de signaux d'image à balayage de trame entrelacé.**

(30) Priorité: **09.11.87 FR 8715503**

(43) Date de publication de la demande:
**17.05.89 Bulletin 89/20**

(45) Mention de la délivrance du brevet:
**17.02.93 Bulletin 93/07**

(84) Etats contractants désignés:
**DE GB IT NL SE**

(56) Documents cités:
**EP-A- 0 018 856**
**FR-A- 2 489 061**
**US-A- 3 051 778**

**1984 INTERNATIONAL ZÜRICH SEMINAR ON DIGITAL COMMUNICATIONS, Applications of source coding cannel coding and secrecy coding, Zurich, 6-8 mars 1984, pages 49-56, Swiss Federal Institute of Technology, IEEE; J. DEWITTE et al.: "Optimization of addressing bit rate in a multimode coder with motion compensation for broadcast television"**

(73) Titulaire: **FRANCE TELECOM**
**6, Place d'Alleray**
**F-75015 Paris(FR)**

Titulaire: **TELEDIFFUSION DE FRANCE S.A.**
**21-25, rue Barbès, B.P. 518**
**F-92542 Montrouge Cedex(FR)**

(72) Inventeur: **Choquet, Bruno**
**27, allée Jean-Sébastien Bach**
**F-35000 Rennes(FR)**
Inventeur: **Siohan, Pierre**
**8, rue du Moulin Neuf La Chapelle des Fougeretz**
**F-35520 Melesse(FR)**

(74) Mandataire: **Plaçais, Jean-Yves et al**
**Cabinet Netter, 40, rue Vignon**
**F-75009 Paris (FR)**

# Description

L'invention concerne les images de télévision.

Ces images sont communéments produites selon une norme dite de balayage entrelacé : chaque image est divisée en deux trames successives, qui sont décalées dans l'espace d'une demi-ligne dans le sens vertical, et qui sont décalées dans le temps de la durée du balayage d'une trame.

L'entrelacement possède plusieurs inconvénients. Il complique considérablement la conversion d'images d'une norme de télévision à une autre, l'analyse spatio-temporelle des images, et aussi l'amélioration des images par traitement de celles-ci. En effet, les informations d'image ont une structure tridimensionnelle (deux dimensions dans l'espace, plus le temps) qui n'est pas orthogonale lorsque le balayage est entrelacé : un point donné d'une trame n'a pas d'équivalent dans la trame suivante; celle-ci ne contient que des points voisins dudit point donné, lesquels points voisins n'existaient pas dans la trame du point donné.

Il est donc nécessaire d'effectuer un "désentrelacement", c'est-à-dire de passer du balayage de deux trames entrelacées, non superposables, au balayage séquentiel de deux images de structures identiques et superposables.

Le désentrelacement fait intervenir des interpolations entre points images, dans l'espace temps. Chaque point image, ou pixel, est défini par deux coordonnées d'espace (x selon les lignes horizontales et y verticalement, perpendiculairement aux lignes) ainsi que par la coordonnée de temps (t) associée à la trame entrelacée ou à l'image non entrelacée à laquelle il appartient.

Parmi les nombreuses études concernant le désentrelacement, on citera les suivantes :

- J. SANTILLANA, B. CHOQUET. "Algorithmes de détection et d'estimation de mouvement dans des images de télévision". CCETT:RTI/T/007/85/JS-BC, Mars 85.
- B. CHOQUET. "Inventaire des techniques de traitement d'images en conversion de normes de représentation pour la télévision Haute Définition". CCETT: RTI/NT/031/86/BC, 25 Novembre 1986.
- D. PELE, B. CHOQUET. "Algorithmes d'analyse spatio-temporelle pour Télévision Haute Définition". CCETT: CAL/T/002/87/DP et RTI/T/004/87/BC, April 87.
- B. CHOQUET, P. SIOHAN, A. BENSLIMANE. "Détection d'activité, dans une séquence d'images, par gradient temporel et par gradient spatial". CCETT: RTI/T/017/85/BC et CAL/T/006/85/PS.AB, Juillet 85.
- P. SIOHAN, B. CHOQUET. "Multidimensionnal processing for motion detection". PCS 86: Tokyo, April 2-4, pages 65.

66, session 3.18.
- B. CHOQUET, P. SIOHAN. "Enhancement techniques of a motion detector in High Definition Television". IEE, Second International Conference on Image processing and its applications. Conference publication number 265, 24-26 June 1986 (pages 215-219).
- P. SIOHAN, B. CHOQUET. "Motiion detection for the deinterlace in HDTV picture processing". International Eurasip Workshop on Coding of HDTV: 12-13 November 1986, l'Aquila, Italy (Vol 2).
- B. CHOQUET, P. SIOHAN. "Désentrelacement par interpolations adaptatives". Colloque sur la Télévision Haute Définition: Ottawa, 4-8 Octobre 1986.
- D-PELE. "Quelques méthodes de segmentation d'images". ENST-Bretagne: 86/LEMPAB/RCM/01.

Malgré ces nombreuses études, on ne dispose pas à l'heure actuelle d'une technique de désentrelacement qui soit à la fois simple, performante et efficace, et ceci notamment pour la télévision à haute définition, où la qualité des images de base rend nécessaire une refonte complète des techniques utilisées jusqu'à présent.

Le critère de simplicité intéresse le nombre d'informations à prendre en compte pour effectuer le désentrelacement. Il a par exemple été proposé de recourir à un filtre linéaire passe-bas dont les informations d'entrée sont 11 lignes d'image (ouverture verticale) et ce sur 7 trames (ouverture temporelle). Il est clair que ce filtre linéaire passe-bas est à la limite de la complexité acceptable.

Le critère de performance intéresse la rapidité d'action des moyens utilisés : il est bien entendu nécessaire qu'ils opèrent en temps réel, c'est-à-dire au moins aussi vite que le renouvellement des informations d'images. Ceci amène à des compromis entre le nombre d'informations d'entrée à prendre en compte et la sophistication des moyens de traitement de ces informations. Par exemple, dans le cas du filtre linéaire précité, il est pratiquement impossible de faire évoluer les paramètres d'interpolation en fonction du contenu local de l'image.

Le critère d'efficacité concerne le résultat obtenu sur les images désentrelacées. Sont notamment à éviter les défauts suivants :

- perte de définition sur les zones fixes de l'image, ce qui est un phénomène particulièrement critique et gênant pour un observateur;
- perte de définition sur les zones en mouvement, qui est génante si l'oeil suit l'objet en mouvement;
- contours diagonaux dégradés, car ils sont restitués en "marche d'escalier";

- mauvaise restitution, voire effacement des contours en déplacement rapide ou très rapide.

La présente invention a pour but de fournir un procédé et un dispositif perfectionnés pour le traitement de signaux d'images, qui soient de nature à améliorer sensiblement la situation en matière de technique de désentrelacement.

L'invention se définit à partir d'un procédé comprenant les étapes suivantes :

a) sélectionner un couple temporel et un couple spatial de points principaux en relation avec un point désiré d'une ligne à interpoler dans une trame en cours d'interpolation, les points principaux dudit couple temporel étant dans la même position sur l'image que le point désiré, mais situés dans les deux trames encadrant dans le temps la trame en cours d'interpolation, tandis que les points principaux du couple spatial sont dans la trame en cours d'interpolation, mais dans les deux positions verticalement adjacentes à celle du point désiré, respectivement,

b) calculer la différence principale dite temporelle entre les signaux des deux points du couple temporel, ainsi que la différence principale dite spatiale entre les signaux des deux points du couple spatial,

c) choisir une fonction d'interpolation compte tenu de ces différences principales, et

d) calculer le signal interpolé du point désiré à l'aide de cette fonction d'interpolation.

En d'autres termes, il est connu de partir des signaux d'entrée vidéo pour réaliser d'une part une détection de mouvement dans une zone entourant le point à interpoler, d'autre part la sélection d'une fonction d'interpolation dans une bibliothèque de telles fonctions. A partir de ces deux types d'informations, on pourra faire intervenir la décision du choix d'un algorithme déterminé, et des critères de transition entre deux algorithmes différents. Le fruit de cela est une fonction d'interpolation définitive, qui est appliquée sur les signaux d'entrée ou des signaux tirés de ceux-ci.

Par exemple, la détection de mouvement peut s'effectuer à partir de la différence principale temporelle et de la différence principale spatiale, ce pour quoi diverses propositions ont été faites dans l'art antérieur.

L'invention procède différemment.

Selon un premier aspect de l'invention, l'étape c) comprend, pour chaque couple de points principaux :

c1) la sélection de points auxiliaires situés sur la même ligne d'image que les points principaux et propres à définir des couples auxiliaires de points encadrant le point désiré, en même temps qu'une zone spatio-temporelle entourant le point désiré et comprenant les deux points principaux ainsi que les points auxiliaires associés à ces deux points principaux,

c2) le calcul de différences auxiliaires entre les signaux de deux points de chaque couple auxiliaire,

c3) la détermination d'une interpolation partielle de premier niveau dans la direction de celui parmi le couple principal et les couples auxiliaires associés qui donne une différence minimale,

c4) la détermination d'une interpolation partielle de second niveau dans la direction du couple de points principaux concerné.

De son côté, l'étape d) comprend :

d1) pour chaque couple de points principaux, la sélection hiérarchique entre l'interpolation partielle de premier niveau et celle de second niveau, en fonction du fait que ladite zone ne contient pas ou contient un contour local horizontal, et

d2) le calcul de la luminance interpolée définitive du point désiré à partir d'interpolations partielles relatives à chacun des couples de points principaux.

Avantageusement, l'étape c3) comporte la recherche des minima non seulement sur des différences simples entre les signaux de deux points de chaque couple, mais aussi sur des combinaisons linéaires des signaux de plus de deux points qui sont normées comme des différences. Ceci permet notamment de résoudre les cas où plusieurs couples de points donnent la même différence minimale.

Très avantageusement, l'opération c1) comprend la sélection de deux points auxiliaires d'un côté de chaque point principal et de deux autres points auxiliaires de l'autre côté de chaque point principal, tous sur la même ligne d'image que lui. L'étape c) comprend alors en outre l'opération suivante :

c5) détermination d'une interpolation partielle de troisième niveau, dans la direction du couple de points auxiliaires les plus éloignés l'un de l'autre qui donne lieu à une différence minimale.

L'opération d1) comprend alors, pour chaque couple de points principaux, la sélection entre l'interpolation partielle de premier niveau, celle de second niveau, et celle de troisième niveau, en fonction du fait que ladite zone ne contient pas de contour horizontal ou sensiblement horizontal, contient un contour horizontal ou contient un contour quasi-horizontal, respectivement.

Il est envisageable d'effectuer la détection de présence d'un contour local par les techniques antérieures connues. Cependant, il est particulièrement intéressant, selon la présente invention, d'effectuer cette détection de présence par recherche du minimum parmi des différences ou des combinaisons linéaires normées de différences. On verra plus loin comment une telle recherche de minimum permet la sélection hiérarchique entre les trois niveaux d'interpolation.

On s'intéressera maintenant au second aspect de l'invention, qui n'est pas nécessairement lié au premier. Selon ce second aspect :

l'étape a) comprend, en plus du couple spatial et du couple temporel, la sélection de deux couples dits spatio-temporels comprenant chacun deux points supplémentaires encadrant le point désiré; chacun de ces points principaux supplémentaires est situé dans la même trame et sur la même verticale que l'un des points principaux temporels mentionnés en premier lieu, mais sur une ligne d'image adjacente à celle de ce point principal temporel, dans la trame concernée,

l'étape b) comprend le calcul de deux différences principales spatio-temporelles avec ses deux couples de poi-nts principaux supplémentaires.

Les deux aspects de l'invention étant combinés, le mécanisme d'interpolation partielle hiérarchique défini aux étapes b) et c) est appliqué non seulement pour les couples de points principaux spatiaux et temporels, mais aussi pour les deux couples de points principaux spatio-temporels.

Quant au second aspect de l'invention lui-même, il est très avantageux que l'opération des deux comprenne la recombinaison pondérée des interpolations tirées de chaque couple de points principaux, en fonction de l'amplitude de la différence principale associée, relativement à la somme des différences principales.

Dès lors qu'il est appliqué au désentrelacement d'images, le procédé selon l'invention comporte naturellement l'étape supplémentaire suivante :

e) réunir chaque trame initiale et la trame de points interpolés correspondante, pour obtenir une image désentrelacée.

L'invention offre également un dispositif de traitement de signaux d'image, en particulier à balayage de trame entrelacé, comportant :

- une entrée de signaux séquentiels d'image, fournissant à chaque fois un signal relatif à un point nouveau situé sur une ligne déterminée de la trame incidente,
- des moyens de mémoire de signaux d'entrée successifs, par trames et par lignes, pour définir une fenêtre spatio-temporelle autour d'un point désiré d'une ligne à interpoler, dans une trame en cours d'interpolation précédant la trame incidente; ces mémoires fournissent simultanément en sortie un couple temporel de points principaux qui sont dans la même position que le point désiré mais dans les trames qui suivent et précèdent la trame en cours d'interpolation, respectivement, et un couple spatial de points principaux qui sont dans la trame en cours d'interpolation, mais dans les deux positions verticalement adjacentes au point désiré, respectivement,

- de premiers moyens de traitement pour établir des interpolations provisoires du point désiré à partir des sorties des mémoires (le mot "provisoire" est utilisé ici car la technique antérieure ne connaissait pas des interpolations partielles au sens de la présente invention), et
- de seconds moyens de traitement travaillant également à partir des sorties des mémoires pour établir l'interpolation définitive du point désiré à partir des interpolations provisoires, à l'aide de différences entre les points principaux desdits couples temporels et spatiaux.

Selon l'invention, les moyens de mémoire sont étendus pour fournir, en correspondance de chaque point principal, au moins deux points auxiliaires situés sur la même ligne d'image que lui et l'encadrant.

Pour chaque couple de points principaux, les moyens de traitement sont agencés pour :

. déterminer des différences auxiliaires sur des couples de points auxiliaires associés à ces points principaux et encadrant le point désiré dans l'espace-temps,

. calculer une interpolation partielle de premier niveau dans la direction de celui parmi le couple principal et les couples auxiliaires associés qui donne une différence minimale,

. calculer une interpolation partielle de second niveau dans la direction du couple de points principaux concernés,

. de préférence, calculer aussi une interpolation partielle de troisième niveau, dans la direction du couple de points auxiliaires les plus éloignés l'un de l'autre qui donne lieu à une différence minimale,

pour leur part, les seconds moyens de traitement réalisent, pour chaque couple de points principaux, une interpolation partielle obtenue par la sélection hiérarchique entre l'interpolation de premier niveau et celle de second niveau (éventuellement celle du troisième niveau) en fonction d'une recherche du minimum parmi des différences ou des combinaisons linéaires normées de différences intéressant ce couple de points principaux et les points auxiliaires associés.

Enfin, pour les différents couples de points principaux, les seconds moyens de traitement réalisent la recombinaison pondérée des interpolations partielles sélectionnées, la pondération s'effectuant de préférence à chaque fois en fonction de l'amplitude de la différence principale concernée relativement à la somme des différences principales.

Pour le reste, le dispositif selon l'invention est susceptible des variantes déjà exprimées à propos du procédé.

En pratique, chaque interpolation partielle peut être définie comme la moyenne pondérée des deux points ou groupes de points sur lesquels s'effectue cette interpolation. La pondération peut consister par exemple en la recopie de l'un des deux points ou groupes de points considérés, ou bien en la demi-somme des signaux de deux points ou groupes de points considérés.

D'autres caractéristiques et avantages de l'invention apparaîtront à l'examen de la description détaillée ci-après, et des dessins annexés, sur lesquels :

- les figures 1A et 1B sont deux schémas permettant de comprendre les différences entre des signaux de télévision à balayage de trame entrelacé, et des signaux de télévision à balayage non entrelacé ou séquentiel;
- la figure 2 est un schéma de principe du dispositif selon l'invention;
- les figures 2A et 2B sont deux schémas permettant de mieux comprendre la notion de "point principal" telle qu'utilisée selon la présente invention;
- la figure 3 est un schéma détaillé des mémoires de trames MT et de lignes ML apparaissant sur la figure 2;
- la figure 4 est un schéma encore plus détaillé de l'une des mémoires de lignes;
- les figures 4A et 4B sont deux diagrammes permettant de mieux comprendre la signification des points principaux et auxiliaires utilisés selon la présente invention;
- la figure 5 est un schéma détaillé des circuits CG et CPG de la figure 2;
- la figure 6 est un schéma plus détaillé du circuit CG de la figure 5;
- la figure 7 est le schéma de principe de l'un des interpolateurs partiels IPi de la figure 2;
- la figure 7A est un schéma fonctionnel correspondant à la figure 7 et permettant de mieux comprendre le travail de l'interpolateur partiel;
- les figures 8 à 10 sont des schémas détaillés des circuits IP11, IP12 et IP13 de la figure 7, respectivement;
- les figures 11 à 13 sont des schémas plus détaillés des circuits IPN1, IPN1A et IPN1B de la figure 7, respectivement;
- la figure 14 est un schéma plus détaillé des circuits ID et CR de la figure 2; et
- la figure 15 est un schéma plus détaillé du circuit CR de la figure 14.

Les dessins comportent à de nombreux titres des éléments de caractère géométrique et/ou certain. En conséquence, ils pourront non seulement servir à mieux faire comprendre la description détaillée ci-après, mais aussi contribuer à la définition de l'invention, le cas échéant.

On utilisera ci-après le symbole I suivi de la désignation d'un point ou des coordonnées de celui-ci. Ce symbole désigne le signal vidéo associé à ce point. Ce signal vidéo est en principe la luminance du point ou pixel, bien que des signaux de couleurs (chrominance) puissent également intervenir.

Par ailleurs, la description détaillée ci-après se place dans le cadre où les signaux vidéo d'entrée sont numériques. Cependant, l'homme de l'art comprendra que l'invention pourrait également être mise en oeuvre avec des signaux analogiques.

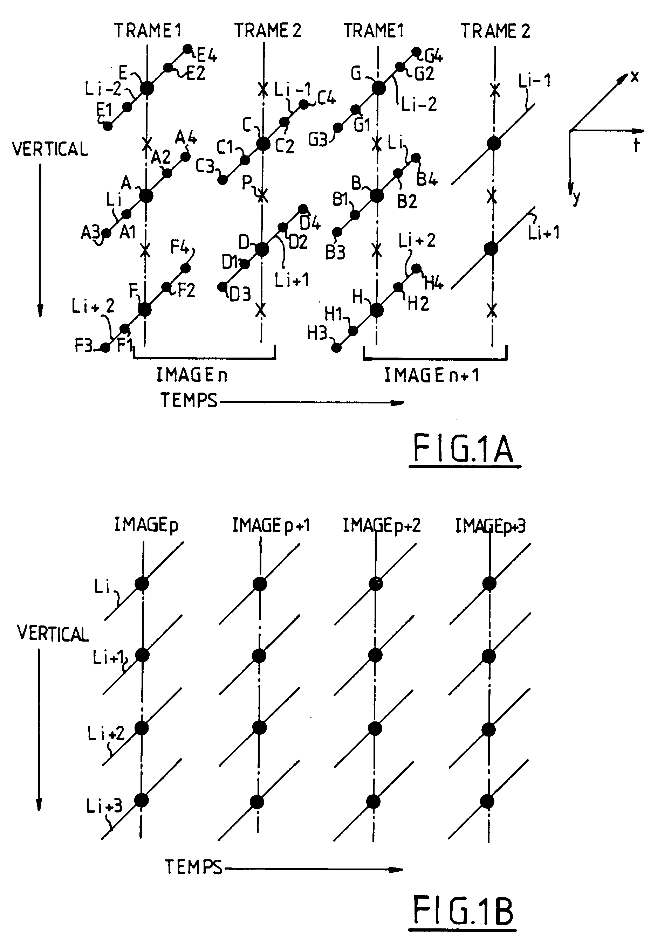

Les figures 1A et 1B montrent la structure spatio-temporelle de signaux de télévision.

Sur la figure 1A (balayage de trame entrelacé), chaque image comporte deux trames successives, à savoir une trame 1 et une trame 2. La trame 1 comprend par exemple les lignes Li-2, Li et Li+2 d'une image, tandis que la trame 2 contient les lignes Li-1 et Li+1 qui viennent s'insérer entre les lignes de la trame précédente. Le dessin est effectué en pseudo-perspective, chaque trame étant constituée de la direction oblique x et de la direction verticale y. Les trames successives apparaissent dans la direction horizontale t, qui représente le temps.

La figure 1B montre un balayage d'image non entrelacé ou séquentiel. Chaque balayage vertical intéresse alors tous les points d'une image donnée, c'est-à-dire toutes les lignes par exemple de Li à Li+3.

Le désentrelacement consiste à déterminer les points manquants dans les trames de la figure 1A, points manquants qui sont marqués par des "x". Après avoir déterminé tous les points manquants d'une trame, on peut passer de chaque trame à une image complète en réunissant les lignes de points réels de cette trame et les lignes de points interpolés complémentaires.

La figure 1A fait encore apparaître un point courant à interpoler noté P.

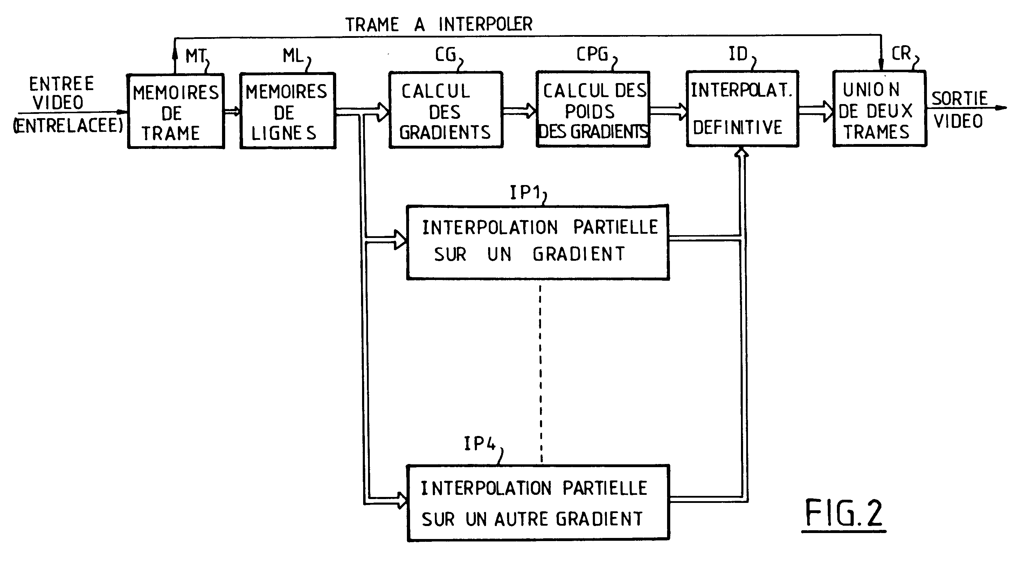

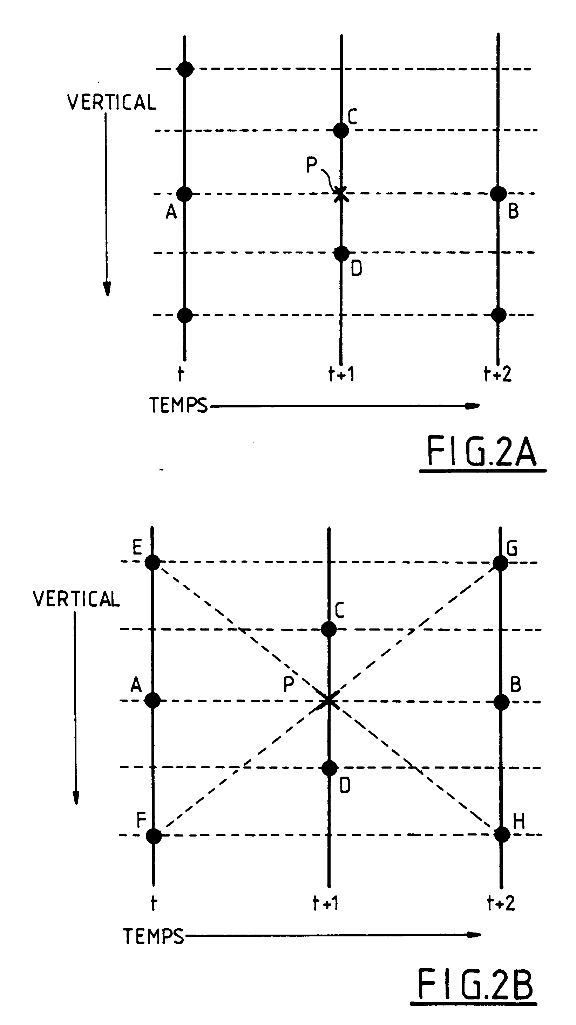

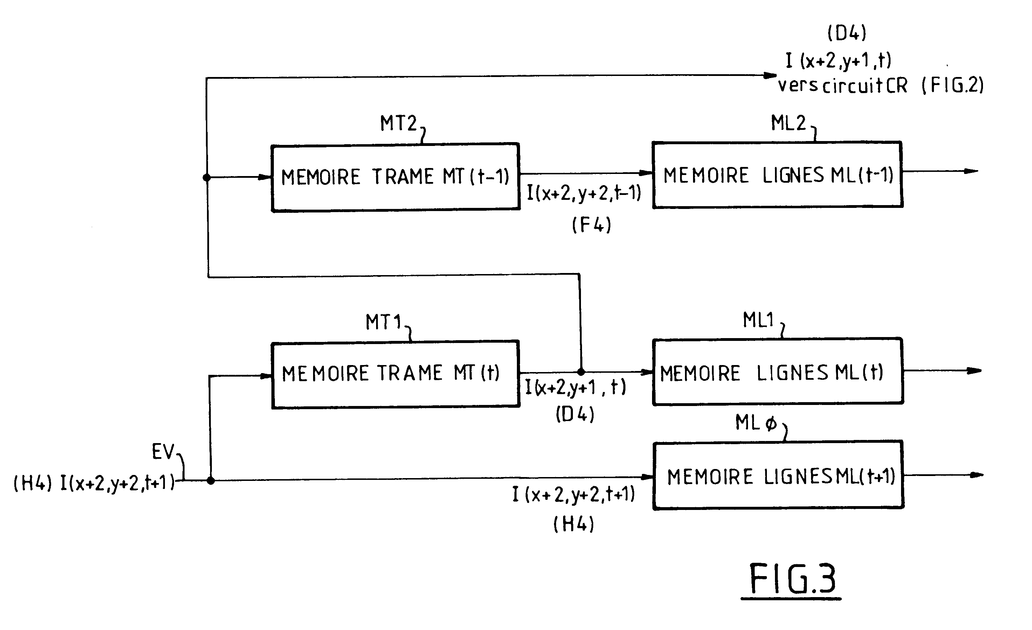

Il sera maintenant fait référence conjointement aux figures 1A, 2A et 2B.

Les figures 2A et 2B correspondent à la figure 1A, avec cependant cette différence que l'on n'a plus fait apparaître en perspective les lignes de chaque trame. Sur les figures 2A et 2B, ces lignes sont supposées perpendiculaires au plan de la figure.

Il est connu d'associer au point à interpoler P les points A et B possédant la même position que lui, mais dans la trame précédente et dans la trame suivante respectivement. Les points A et B seront appelés ici "points principaux temporels".

Il est également connu d'associer au point P les points C et D situés sur la même verticale que lui, dans la même trame, mais sur les lignes adjacentes. Ces points C et D seront appelés "points principaux spatiaux".

Certaines techniques connues pour le désentrelacement font intervenir une détection de mouvement. Cette détection de mouvement est une fonction de deux différences (ou gradients) notées respectivement DT et DS avec :

- DT égal à la valeur absolue de la différence I(A)-I(B) entre les luminances des points A et B, et
- DS égal à la valeur absolue de I(C)-I(D) entre les luminances des points C et D.

Dans la suite, on représentera souvent une telle différence en omettant le symbole I et les parenthèses; en d'autres termes, lorsqu'il s'agit de signaux, le symbole du point représente également le signal d'image relatif à ce point.

On peut établir alors un paramètre m de détection de mouvement qui est une fonction des deux différences ou gradients DT et DS. Plusieurs fonctions de ce type ont été proposées.

On détermine séparément une interpolation du point P dans la direction CD, par exemple à partir des seuls points C et D, plus précisément encore par la moyenne des signaux C et D. Ceci fournit une interpolation spatiale IS pour le point P. On détermine de même une interpolation temporelle IT, par exemple par la moyenne des signaux des points A et B.

Le paramètre m est alors pris en compte pour définir une loi de pondération entre l'interpolation spatiale IS et l'interpolation temporelle IT. La loi de pondération peut revêtir différentes formes : commutation brutale (tout ou rien), commutation douce (loi linéaire, notamment).

L'un des aspects nouveaux de la présente invention réside en ce que la détection de mouvement s'effectue non seulement à partir des points principaux A,B,C,D déjà mentionnés, mais aussi à l'aide des points principaux E,F,G,H apparaissant sur la figure IA. Puisqu'ils font intervenir le temps et l'espace, ces points principaux E,F,G,H sont dits "spatio-temporels". Outre les grandeurs DS et DT déjà mentionnées, on définit deux autres différences ou gradients principaux, dits spatio-temporels, qui sont respectivement :

DØ1 qui est la valeur absolue de la différence I(F)-I(G) entre les signaux des points F et G, et

DØ2 qui est la valeur absolue de la différence I(E)-I(H) entre les signaux des points E et H.

La détection de mouvement peut alors s'effectuer en fonction de ces quatre différences ou gradients. Ceci s'est avéré très avantageux car le fait de travailler sur des directions obliques résout le cas des contours non orthogonaux. De plus, ce moyen procure une meilleure précision de calcul pour l'interpolation de la luminance du point recherché P.

Un autre aspect essentiel de l'invention réside en ce que l'on va effectuer une interpolation partielle hiérarchique sur les diverses différences ou gradients disponibles, et ce séparément pour chacun d'entre eux. Bien que ce procédé d'interpolation partielle hiérarchique puisse être appliqué seulement aux deux différences DT et DS, on considérera ci-après qu'il est appliqué systématiquement aux quatre différrences ou gradients DT, DS, DØ1 et DØ2.

Il est maintenant fait référence au schéma de principe de la figure 2, qui illustre un dispositif selon l'invention.

Le signal d'entrée vidéo (entrelacé) est appliqué à des mémoires de trames MT suivies de mémoires de lignes ML.

A tout instant, ces deux mémoires fournissent une pluralité de signaux d'image, ou luminances, qui sont appliqués d'une part à un circuit de calcul des gradients CG, d'autre part à une pluralité d'interpolateurs partiels IP1 à IP4. Le circuit CG de calcul des gradients est suivi d'un circuit CPG de calcul de poids des gradients.

A partir des interpolations partielles issues des circuits IP1 à IP4, pondérées selon les poids définis par le circuit CPG, un circuit d'interpolation définitive ID établit la valeur (ou signal ou luminance) du point P à interpoler.

Les mémoires de trames MT fournissent la trame à interpoler à un circuit de réunion de deux trames CR qui va pouvoir insérer les points interpolés parmi les points réels de l'image, à leur place exacte. Le signal de sortie vidéo ainsi obtenu n'est plus entrelacé, mais présente au contraire la forme illustrée sur la figure 1B, après réunion des points d'images réels et des points interpolés.

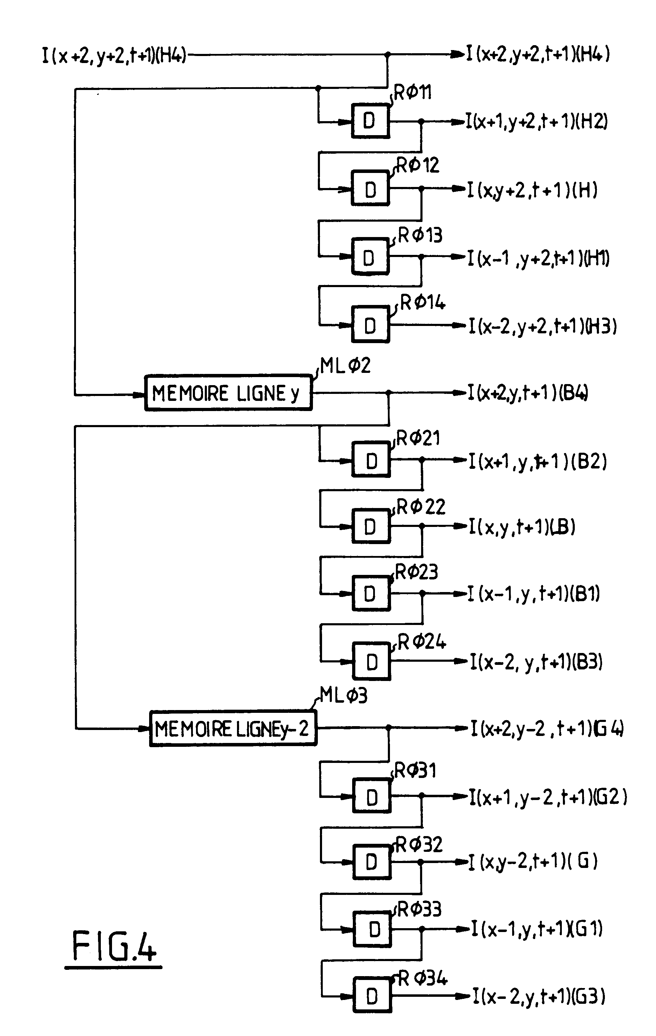

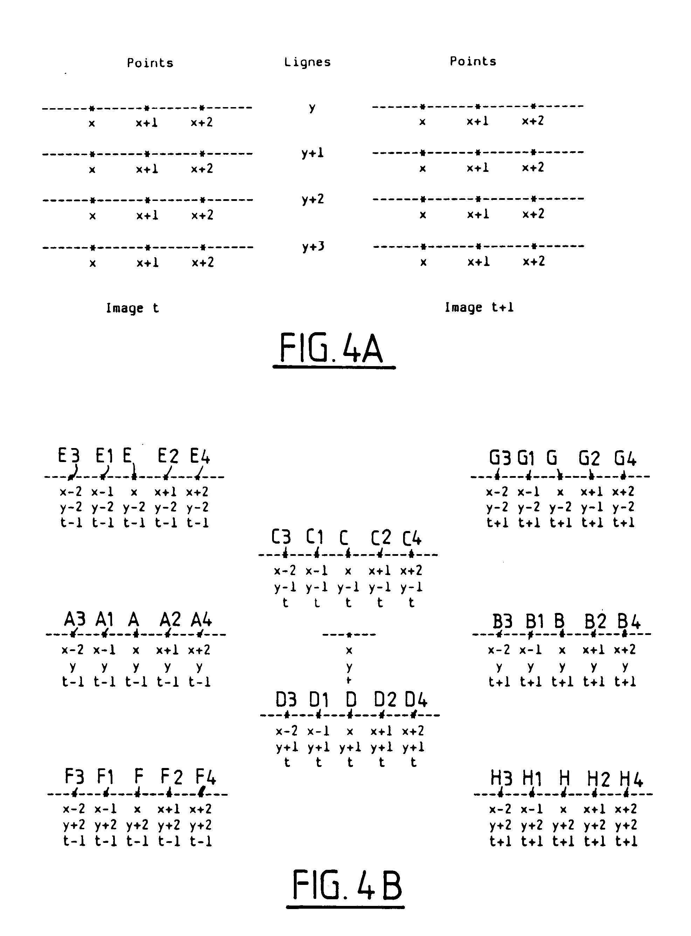

La figure 3 illustre de façon plus détaillée les mémoires de trames et de lignes, tandis que la figure 4 illustre de façon encore plus détaillée l'une des mémoires de lignes. Pour mieux comprendre ces deux figures, il sera tout d'abord fait référence aux figures 4A et 4B.

Selon la figure 4A, il est classique de définir des points d'une image par une abscisse (x, x + 1, x + 2) sur la ligne dont l'ordonnée est elle-même définie par y, y + 1, y + 2. Pour définir complètement dans l'espace et dans le temps les points des images, il faut encore disposer de la coordonnée temporelle. Dans le cas d'images non entrelacées, on est en présence de l'image du temps t suivie de l'image du temps t + 1. On ajoutera encore que l'abscisse x et l'ordonnée y croissent en fonction du temps, c'est-à-dire qu'elles sont comptées dans le sens de parcours du faisceau d'électrons qui définira l'image de télévision.

La figure 4B concerne pour sa part un balayage à trame entrelacé. On y retrouve les points A,B,C,D,E,F,G,H.

Les points A, E et F appartiennent à la trame de l'instant t-1, où ils possèdent l'abscisse de ligne x, et se trouvent respectivement sur les lignes y, y-2 et y+2.

Les points B, G et H sont homologues des précédents, sauf qu'ils se situent dans la trame de l'instant t+1.

Entre ces deux trames semblables se trouve une trame différente portant sur des lignes différentes que l'on voit au milieu de la figure 4B. Les points C et D sont dans cette trame de temps t, à l'abscisse de ligne x, mais sur les lignes de rangs y-1 et y+1 respectivement.

Tous ces points A à H sont des points réels de l'image. La figure 4B fait encore apparaître le point P à interpoler dont les coordonnées sont x, y et t.

Ce point P à interpoler ne peut être calculé que lorsqu'on dispose d'un certain nombre de points de la trame suivante, allant au moins jusqu'au point B. Dans le mode de réalisation décrit, où l'on utilise quatre différences ou gradients, il est clair qu'il faut aller au moins jusqu'au point H.

Cependant, comme on le verra plus loin, la présente invention fait aussi intervenir des points auxiliaires aux points principaux A à H. Chacun de ces points auxiliaires est associé à l'un des points principaux et défini par la même lettre, suivie d'un chiffre. Les points de lignes immédiatement adjacents aux points principaux sont désignés par la lettre du point principal suivie du chiffre 1 ou du chiffre 2 suivant qu'ils sont adjacents en amont ou en aval au point principal. Deux autres points respectivement amont et aval sont définis par les deuxièmes chiffres 3 et 4. Ceci transparaît directement à l'examen des figures 1A et 4B.

Dans ces conditions, c'est seulement lorsqu'on connaît le dernier point, à savoir H4, que l'on peut mettre en oeuvre l'invention, dans le mode de réalisation ici décrit en détail.

On considère donc que le signal disponible sur l'entrée vidéo EV est la luminance I du point de coordonnée x+2, y+2, t+1. Ce signal est appliqué à une mémoire de ligne MLØ concernant la même trame. Un circuit de mémoire de trame MTI réalise un retard de la durée d'une trame complète, de sorte que son signal de sortie possède les coordonnées x+2, y+1 et t, ce qui correspond au point D4. La sortie de cette mémoire de trame MT1 est reliée à l'entrée d'une seconde mémoire de trame MT2, qui fournit à son tour la luminance du point de coordonnée x+2, y+2, t-1, c'est-à-dire du point F4.

Les coordonnées du point D4 sont également appliquées au circuit de sortie CR de la figure 2.

Dans le cas de signaux d'entrée numériques, les mémoires de trames et de lignes sont bien entendu numériques. Dans le cas de signaux analogiques, on peut prendre des lignes à retard.

A partir de chacun des points ainsi disponibles, et avec d'autres retards plus courts, les mémoires de lignes MLØ, ML1 et ML2 vont fournir d'autres points.

Sur la figure 4, on ne décrit que l'ensemble de la mémoire de ligne MLØ, les autres possédant la même structure.

Le bloc de mémoire de ligne MLØ comprend deux mémoires MLØ2 et MLØ3 possédant chacune un retard égal à la durée de balayage d'une ligne.

L'entrée du bloc de mémoire de ligne MLØ est le signal du point H4.

Le bloc MLØ comporte deux autres mémoires de lignes MLØ2 et MLØ3, qui vont alors fournir les signaux des points B4 et G4, respectivement.

Le reste de la figure 4 comporte des circuits de retard, introduisant chacun un écart temporel D égal au temps requis pour passer du point d'une ligne au suivant sur la même ligne. Ainsi, à partir de la sortie de la mémoire MLØ1, les circuits RØ11 à RØ14 fournissent respectivement les points H2, H, H1, H3.

Les circuits RØ21 à RØ24 et RØ31 à RØ34 font de même respectivement à partir des sorties des mémoires MLØ et MLØ3.

L'examen des luminances des points disponibles en sortie sur la figure 4 montre que cette mémoire de ligne MLØ fournit tous les points requis de la trame de temps t+1.

Un circuit exactement identique à celui de la figure 4 peut être utilisé pour la mémoire de ligne ML2. On obtient ainsi tous les points requis de la trame de temps t-1.

La mémoire ML1 possède une structure un peu plus simple : pour l'obtenir, on reprend le schéma de la figure 4, mais en supprimant la mémoire MLØ3 et les retards RØ31 à RØ34. On voit qu'il suffit alors de remplacer dans les coordonnées de points de sortie y+2 par y+1 et y par y-1, tandis que pour tous ces points l'instant t+1 est remplacé par l'instant t.

On a alors tous les points requis dans la trame où se trouve le point recherché P.

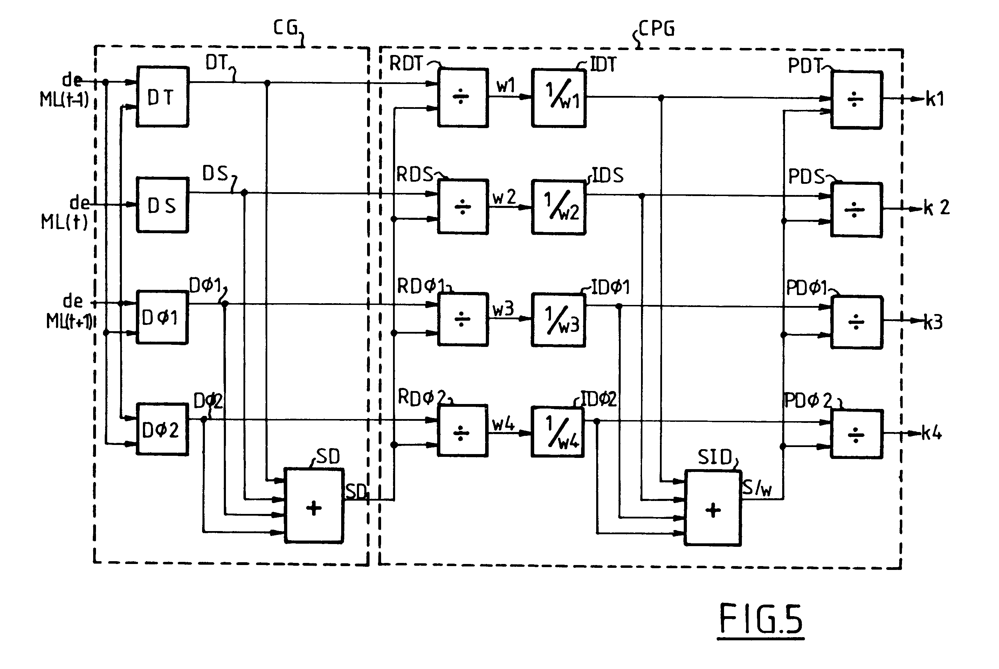

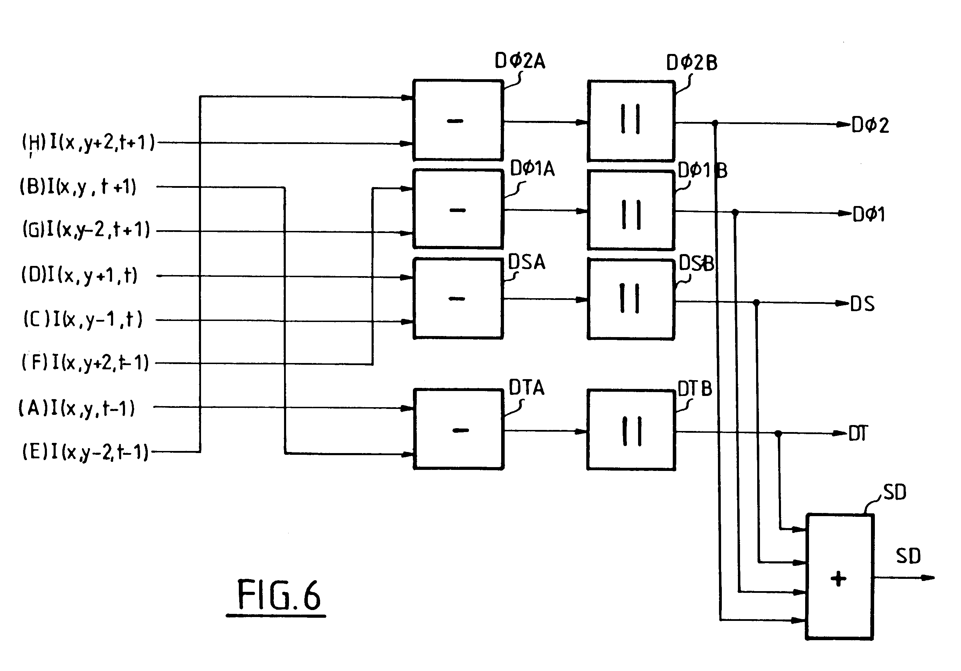

Le circuit CG des figures 2 et 5 sera maintenant décrit en détail en référence à la figure 6. Comme on le voit, il utilise seulement les points principaux. Par exemple, pour les points A et B, un circuit DTA fournit la différence algébrique entre les luminances de ces deux points. Le circuit DTA est suivi d'un circuit DTB fournissant la valeur absolue de cette différence algébrique, qui est DT.

Des circuits DSA, DSB, DØ1A, DØ1B et DØ2A, DØ2B font de même pour fournir les différences en valeur absolue ou gradients DS, DØ1 et DØ2.

Enfin, un circuit additionneur SD fournit la somme de ces quatre gradients, que l'on notera également SD.

Revenant maintenant à la figure 5, les quatre différences DS, DT, DØ1, DØ2 et leur somme SD sont appliquées au circuit CPG. Celui-ci comporte des diviseurs RDT, RDS, RDØ1 et RDØ2, recevant respectivement comme quantités à diviser les signaux DT, DS, DØ1 et DØ2. et comme quantité diviseuse la somme SD. Les rapports ainsi obtenus sont notés respectivement W1 à W4. Des inverseurs IDT, IDS, IDØ1 et IDØ2 fournissent chacun l'inverse de ces quantités. Un circuit SID réalise la somme de ces inverses, noté S/w. Enfin des circuits diviseurs PDT, PDS, PDØ1 et PDØ2 reçoivent respectivement comme quantités à diviser les inverses 1/w1, 1/w2, 1/w3 et 1/w4, et comme quantité diviseuse la somme S/w, pour fournir des coefficients de pondération respectifs k1 à k4.

L'homme de l'art comprendra que ceci réalise une détection de mouvement à partir des quatre différences ou gradients disponibles. Il existe d'autres manières de concevoir cette détection de mouvement. Il a été considéré comme particuliérement simple de normer les quatre gradients par rapport à leur somme.

On recherche alors les coefficients de pondération terminaux k1 à k4, qui vont être respectivement associés à des interpolations partielles IT, IS, IØ1 et IØ2. On donnera ci-après la manière préférentielle, selon l'invention, d'obtenir ces interpolations partielles.

Pour réaliser une interpolation de la manière ci-dessus décrite, il est nécessaire que les coefficients vérifient les deux relations suivantes :

$$k1 + k2 + k3 + k4 = 1$$
$$k1w1 = k2w2 = k3w3 = k4w4.$$

Le mode de réalisation qui vient d'être décrit n'est qu'une solution particulière de ces deux équations. L'homme de l'art comprendra qu'il en existe d'autres, qui peuvent être également utilisées pour la mise en oeuvre de l'invention.

Ce qui vient d'être décrit concerne le premier aspect nouveau de l'invention, à savoir l'usage de quatre différences ou gradients, aux fins d'établir une détection de mouvement, et de pondérer à partir de là quatre interpolations partielles respectivement effectuées dans des directions associées aux couples de points principaux ayant permis l'établissement des quatre gradients.

On décrira maintenant la manière d'obtenir chacune de ces quatre interpolations partielles, suivant l'autre aspect nouveau de l'invention qui est la sélection hiérarchique entre plusieurs niveaux d'interpolation, et ce pour chaque interpolation partielle.

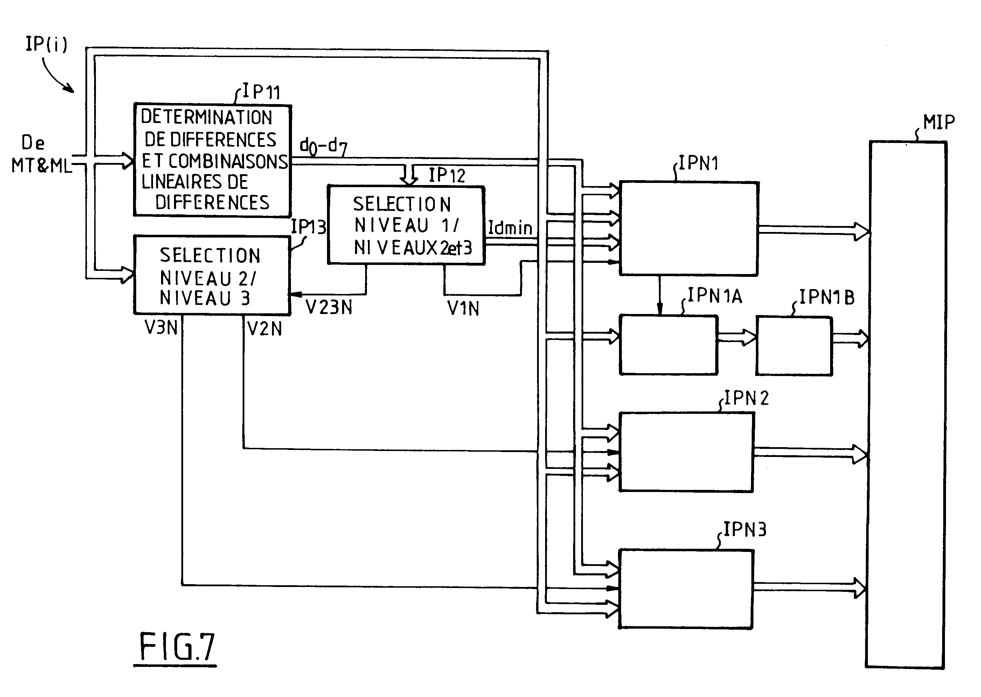

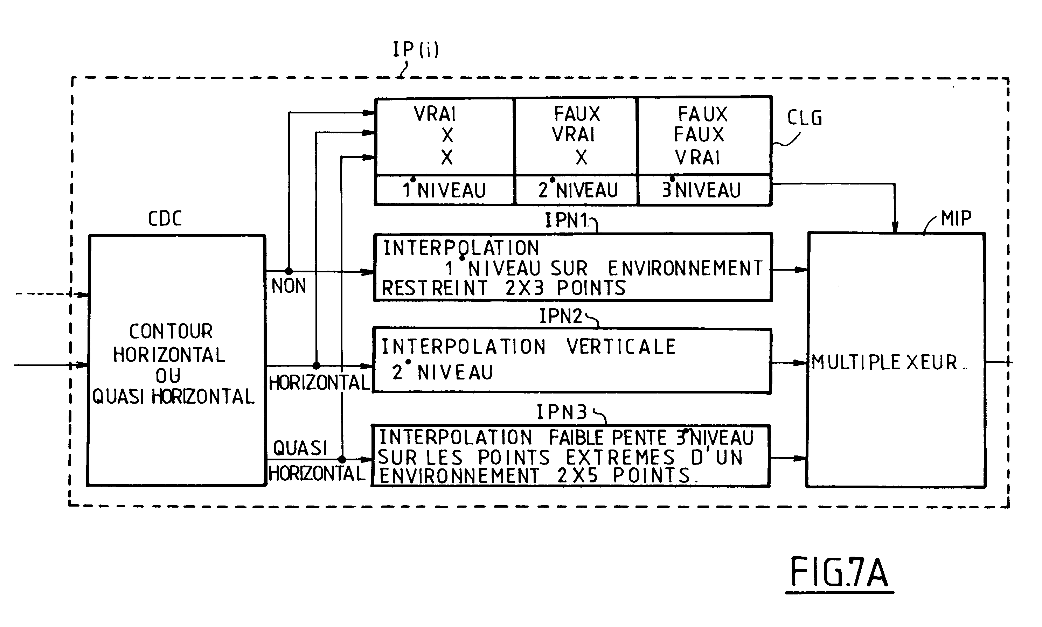

La figure 7 représente le schéma de principe de l'un des quatre interpolateurs partiels IP1 à IP4 de la figure 2.

Les signaux d'entrée sont issus des mémoires MT et ML. Ils vont varier suivant l'interpolateur partiel considéré.

Ces interpolateurs partiels font intervenir chacun un couple de points principaux, et les quatre points auxiliaires associés à ceux-ci.

Par exemple l'interpolateur partiel pour la différence temporelle DT fait intervenir les points principaux A et B, et les points auxiliaires A1 à A4 ainsi que B1 à B4. Le second interpolateur partiel fait intervenir les points C et D et leurs points auxiliaires.

Le troisième interpolateur partiel fait intervenir les points E et H et leurs points auxiliaires.

Le quatrième interpolateur partiel fait intervenir les points F et G et leurs points auxiliaires.

Les trois interpolateurs partiels associés à la différence temporelle et aux différences spatio-temporelles (points A et B ainsi que E à H) auront besoin de signaux tirés d'une part de la trame t-1, d'autre part de la trame t + 1. Par contre, l'interpolateur partiel spatial relatif aux points C et D n'a besoin que de signaux tirés de la trame en cours d'interpolation, relative à l'instant t.

La figure 7 fait apparaître que chaque interpolateur partiel reçoit donc des signaux d'entrée relatifs aux points principaux et auxiliaires qui le concernent. A partir de ces signaux d'entrée, un circuit IP11 détermine des différences et des combinaisons linéaires normées de différences que l'on notera dØ à d7. L'homme de l'art comprendra que des combinaisons linéaires normées de différences peuvent être aussi considérées comme des moyennes pondérées de différences.

Un circuit IP12 va permettre, à partir de certaines de ces différences, de réaliser la sélection hiérarchique soit entre l'interpolation d'un niveau 1, soit entre l'une des interpolations de niveaux 2 et 3. A cet égard, on notera qu'il serait possible de faire travailler le dispositif selon l'invention avec seulement les interpolations de niveaux 1 et 2. Mais il est estimé largement préférable d'utiliser aussi l'interpolation de niveau 3, qui améliore d'une manière substantielle les résultats visuels obtenus après désentrelacement.

Le signal V1N va valider l'interpolation partielle de niveau 1. Le signal V23N valide le circuit IP12 qui, à partir de certains des signaux d'entrée, va sélectionner entre les niveaux 2 et 3, respectivement validés par les lignes V2N et V3N.

Un interpolateur de premier niveau IPN1 est validé par la ligne V1N. Il réalise l'interpolation à partir de certains des signaux DØ à D7 et des signaux d'entrée. On verra plus loin que ce circuit a besoin de certains des signaux de différences pour choisir la direction dans laquelle il va réaliser l'interpolation. Il recherche à cet effet un minimum parmi ces différences. En cas d'ambiguïté entre deux minima, on prévoit de préférence des circuits auxiliaires pour l'interpolation partielle de premier niveau, notée IPN1A et IPN1B.

L'interpolation de second niveau est réalisée par le circuit IPN2, validée par le signal V2N, et recevant les signaux d'entrée et/ou les signaux de différence.

L'interpolation partielle de troisième niveau est réalisée par le circuit IPNP3 qui reçoit lui aussi des signaux d'entrées et de différences et se trouve validé par le signal V3N.

Ce circuit IPN3 réalise aussi l'interpolation par sélection d'une direction en fonction de minima, et peut devoir être doublé comme le circuit IPN1, en cas d'ambiguïté sur les minima.

L'ensemble des interpolations ainsi disponibles est appliqué à un multiplexeur MIP, qui peut consister en un simple aiguillage des sorties des différents interpolateurs en fonction de celui des signaux de validation de niveau d'interpolation qui est en vigueur. Une variante consiste à simplement relier entre elles les sorties des interpolateurs, et à ne rendre active que la sortie de l'interpolateur partiel du niveau qui est validé.

La figure 7A illustre fonctionnellement ce qui se passe dans un interpolateur partiel. Les signaux d'entrée issus d'une ou de deux mémoires de trames et des mémoires de lignes associées sont appliqués à un bloc fonctionnel CDC qui recherche la présence d'un contour horizontal ou quasi-horizontal dans la zone de points considérés.

En l'absence de tout contour de ce type, c'est l'interpolateur de premier niveau IPN1 qui est validé. Il opère sur un environnement restreint de 2x3 points, dont la direction est choisie en fonction de critères de minima que l'on verra plus loin.

S'il s'agit d'un contour horizontal, c'est l'interpolateur de second niveau qui est validé. Il réalise une simple interpolation verticale, c'est-à-dire entre les points C et D.

Il est préférable, mais non impératif, qu'en présence d'un contour quasi-horizontal, on fasse opérer un interpolateur de troisième niveau IPN3 qui opère sur les points extrêmes d'un environnement de 2x5 points, à savoir soit le couple EH, soit le couple FG, par rapport au point à interpoler P.

Un circuit logique de commande et de gestion CLG réagit à la détection de contour en actionnant le multiplexeur MIP pour qu'il sélectionne la sortie de l'un des niveaux d'interpolation IPN1 à IPN3.

Ce schéma fonctionnel est utile pour la compréhension de l'invention. Cependant, l'homme de l'art comprendra que les circuits des interpolateurs partiels doivent opérer assez vite pour permettre le calcul en temps réel des différentes grandeurs nécessaires pour l'interpolation finale.

Par ailleurs, les éléments nécessaires aux différentes fonctions illustrées sur la figure 7A sont en partie communs. C'est la raison pour laquelle le schéma de structure générale de la figure 7 est assez différent du schéma fonctionnel de la figure 7A.

Dans la suite de la description détaillée des interpolateurs partiels, on considère l'interpolateur partiel chargé de la direction spatiale verticale définie par le couple de points C et D.

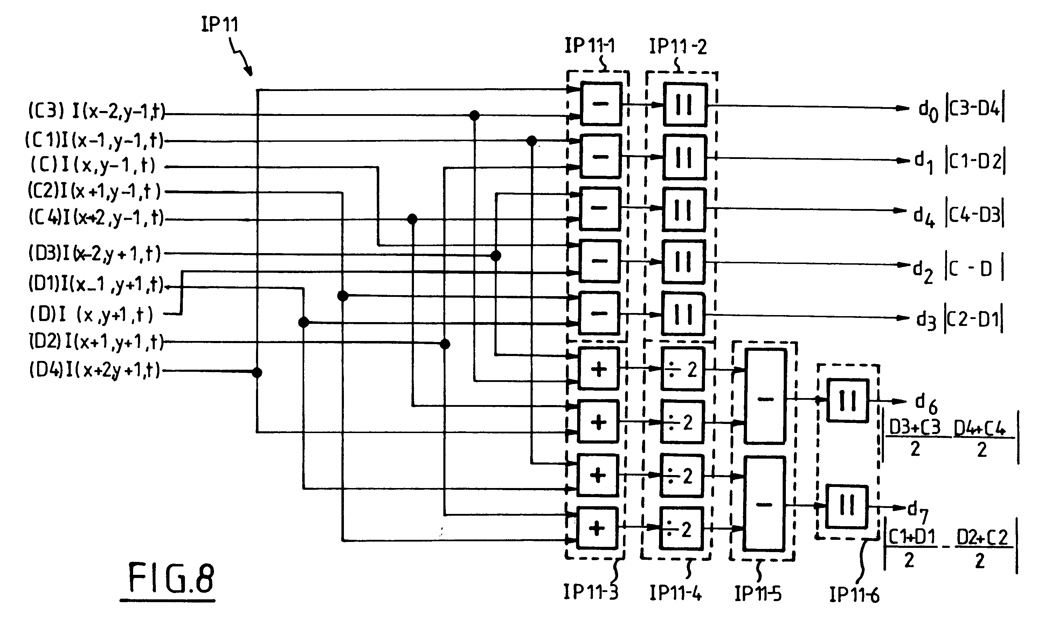

La figure 8 illustre le schéma détaillé du bloc IP11 de la figure 7. Les signaux d'entrée sont relatifs aux points principaux C et D et à leurs points auxiliaires associés. Des soustracteurs IP11-1, suivis de circuits de valeur absolue IP11-2 fournissent les différences d0 à d4, qui sont respectivement relatives aux couples de points C3-D4, C1-D2, C-D, C2-D1 et C4-D3.

La figure 8 montre également des additionneurs P11-3 suivis de diviseurs par ceux IP11-4, de soustracteurs IP11-5 et de circuits de valeur absolue IP11-6, l'ensemble fournissant finalement les différences d6 et d7. La différence d6 est à considérer comme la moyenne pondérée des différences relevée sur les couples C3-D4 et C4-D3. La différence d7 est à considèrer comme la moyenne pondérée des différences relevées sur les couples C1-D2 et C2-D1.

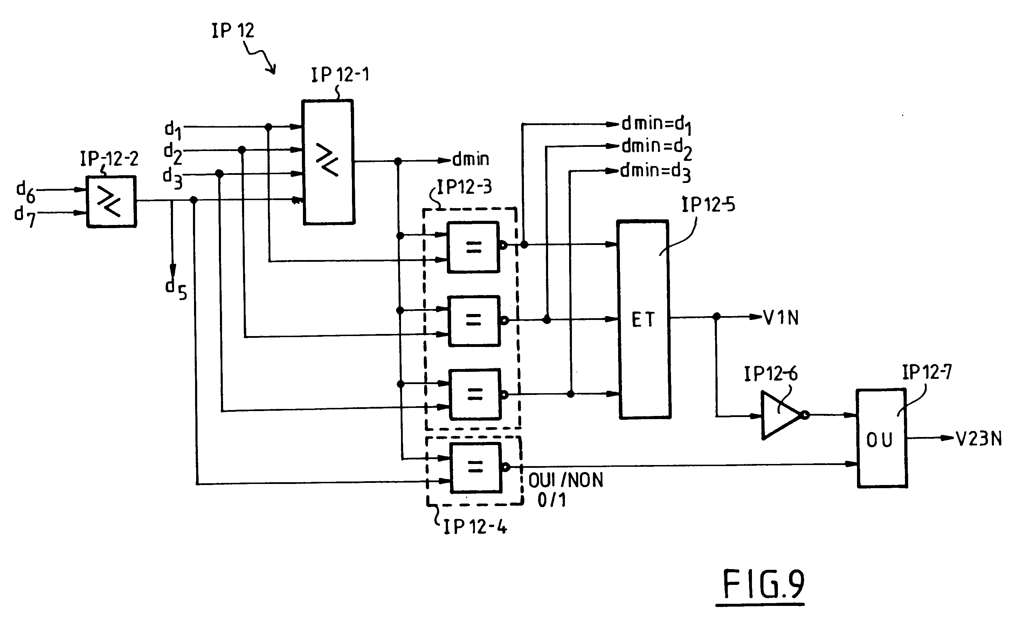

La figure 9 illustre la structure du circuit IP12. Les différences D1 à D3 sont appliquées à un circuit IP12-1 dont le symbole est le signe mathématique ">" superposé au signe mathématique "<". Ce symbole illustre un circuit qui transfère celle de ses entrées qui possède la plus faible valeur.

Le circuit IP12-2 qui a la même fonction donne en sortie une différence d5 qui est donc la plus faible des moyennes de différences d6 et d7. Le circuit IP12-1 fournit alors en sortie une différence dmin qui est le minimum de d1, d2, d3 et d5.

Des comparateurs inverseurs IP12-3 comparent cette valeur dmin à chacune des entrées d1 à d3, pour indiquer laquelle d'entre elles correspond effectivement au minimum, information nécessaire à l'interpolation de premier niveau. Les sorties des comparateurs inverseurs IP12-3 sont au niveau zéro si la comparaison est exacte et un si elle est inexacte. Ainsi, lorsque l'un des trois circuits du bloc IP12-3 indique que l'une des valeurs d1 à d3 est minimale, la sortie du circuit ET inversé noté IP12-5 peut fournir un signal V1N pour la validation de l'interpolation de premier niveau. Ce signal V1N est complémenté par un amplificateur inverseur IP12-6.

En parallèle, un autre circuit comparateur inverseur IP12-4 détermine si c'est ou non la différence d5 qui est égale au minimum. Si c'est le cas, un circuit ou IP12-7, travaillant entre les sorties des organes IP12-4 et IP12-6 fournit un signal V23N pour la validation des interpolations des autres niveaux. Ceci assure la sélection de premier niveau, même si on a par exemple d3 = d5 = dmin.

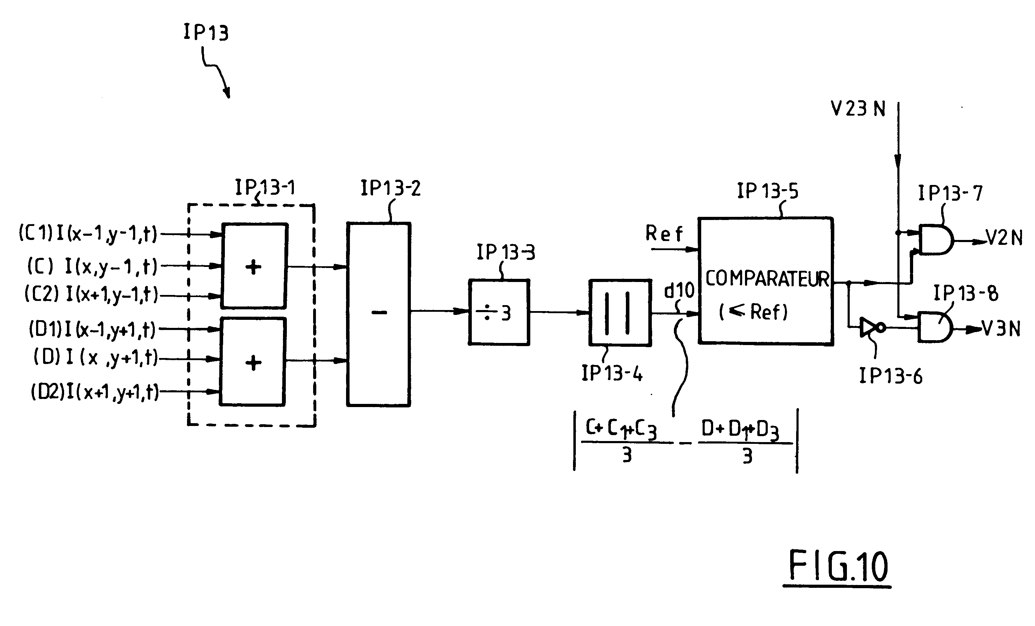

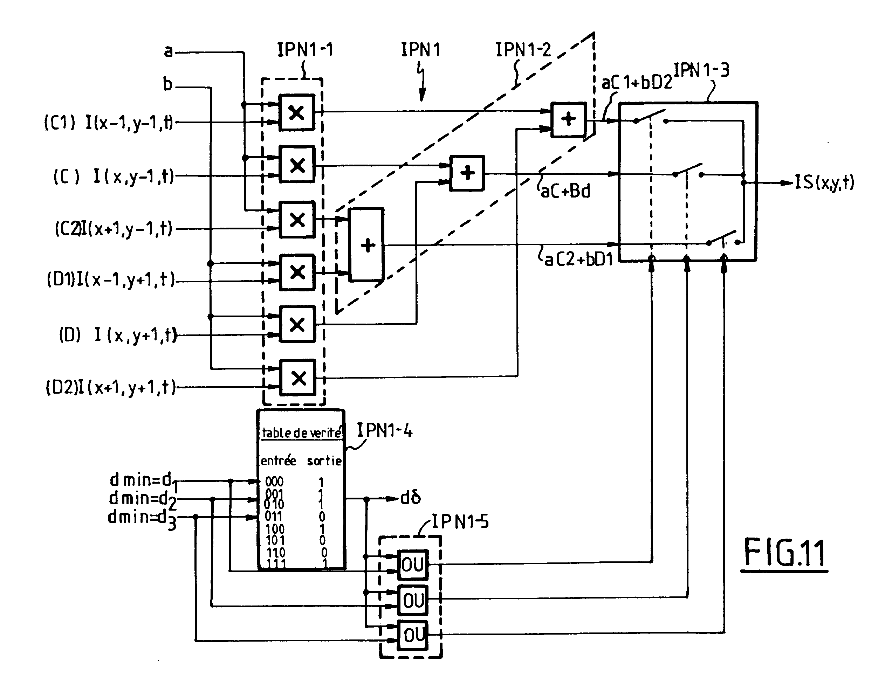

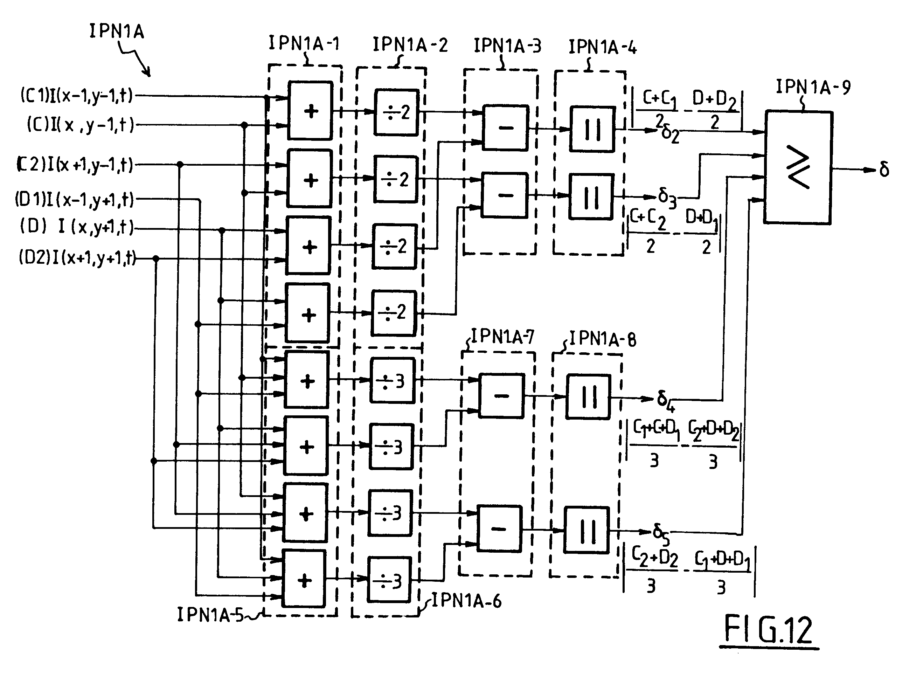

On décrira maintenant en référence à la figure 10 le circuit IP13 qui réalise la sélection entre les interpolations de second et troisième niveaux.

Cette sélection fait intervenir les points principaux C et D, et les deux points auxiliaires les plus proches de part et d'autre de chacun de ceux-ci, c'est-à-dire C1 et C2, D1 et D2.

Des additionneurs IP13-1 suivis d'un soustracteur IP13-2, d'un diviseur par trois IP13-3 et d'un formateur de valeur absolue IP13-4 fournissent une différence d10 qui peut être considérée comme la moyenne pondérée des différences entre le couple des deux points principaux C et D, les couples de points auxiliaires C1 et D3, ainsi que C3 et D1.

Un comparateur IP13-5 reçoit cette différence d10 ainsi qu'un signal de référence. La sortie du comparateur est vraie si la différence d10 est inférieure ou égale à la référence. Ce signal est appliqué directement à une porte ET IP13-7, et après inversion en IP13-6 à une autre porte ET IP13-8. Les deux portes ET reçoivent par ailleurs le signal V23N. L'interpolation de second niveau est validée par le signal V2N si d10 est supérieur ou égal à la référence. Dans le cas contraire, c'est le signal V3N qui va valider l'interpolation de troisième niveau.

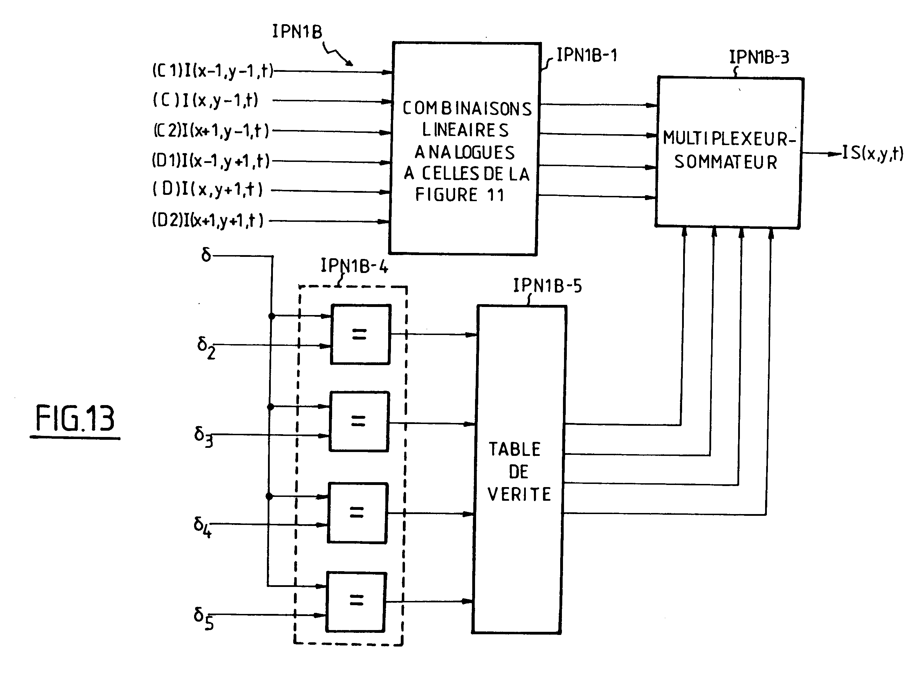

On décrira maintenant, en référence à la figure 11, le circuit d'interpolation partielle de premier niveau IPN1.

Il reçoit comme signaux d'entrée les luminances des points principaux C et D ainsi que des points auxiliaires immédiatement adjacents C1, C2 et D1, D2. Par ailleurs, sont définis deux coefficients de moyenne pondérée a et b dont la somme est 1, et qui vont définir communément pour tous les interpolateurs la manière de base d'effectuer les interpolations. On peut par exemple faire une simple moyenne, ce qui correspond à $a = b = 1/2$, ou bien prendre en compte seulement le point amont, ce qui correspond à $a = 1$ et $b = 0$. Toutes solutions intermédiaires sont envisageables.

Par ailleurs, on pourrait également envisager de faire varier dynamiquement les coefficients a et b, dans chaque interpolateur, par exemple en fonction des différences ou moyennes pondérées de différences déterminant l'action de ces interpolateurs. Ainsi, des multiplicateurs IPN1-1 vont appliquer le coefficient a au point principal C et à ses points auxiliaires et le coefficient b au point principal D et à ses points auxiliaires.

Les additionneurs IPN1-2 vont faire la somme des signaux obtenus pour les deux points de chaque couple. Les sommes ainsi obtenues sont de la forme $aC1 + bD2$, $aC + bD$ et $aC2 + bD1$. Ces sommes sont appliquées au multiplexeur IPNI-3.

En bas de la figure 11 arrivent à gauche. les trois informations indiquant laquelle des différences d1 à d3 a donné un minimum. Si deux de ces différences sont minimales en même temps (deux entrées à zéro pour la table de vérité IPNI-4, compte tenu de l'inversion réalisée par le circuit IP12-4 de la figure 9) est alors produit un signal dDELTA. Lorsqu'il est à 1, ce signal dDELTA indique qu'il faudra recourir à l'interpolateur partiel de premier niveau auxiliaire. Il est appliqué à des circuits OU IPN1-5, recevant par ailleurs chacun l'une des entrées indiquant laquelle des différences dl à d3 est minimale (entrées qui sont sous forme de logique négative). Seul un des circuits OU IPN1-5 va pouvoir alors présenter une sortie au niveau bas, et cela actionne le multiplexeur IPN1-3 pour choisir l'une de ces trois entrées précitées, afin d'établir l'interpolation partielle spatiale IS(x,y,t) pour le point P.

L'usage du signal dDELTA pour mettre en oeuvre une interpolation partielle auxiliaire de premier niveau n'est pas impératif. L'homme de l'art peut en effet concevoir d'autres moyens, en cas de conflit de minimum, pour forcer l'un d'entre eux à agir sur le multiplexeur IPN1-3 de la figure 11.

L'interpolateur auxiliaire de premier niveau comporte un premier circuit IPN1A illustré sur la figure 12. Les entrées sont là encore les points principaux C et D ainsi que leurs deux points auxiliaires les plus proches.

Des additionneurs IPN1A-1 sont suivis de diviseurs par deux IPN1A-2, puis de soustracteurs IPN1A-3 et de formateurs de valeur absolue IPN1A-4, pour fournir deux signaux DELTA2 et DELTA3 représentant respectivement :
- pour le premier la moyenne des différences ou gradients sur les couples de points C et D d'une part, C1 et D2 d'autre part,
- pour le second la moyenne des différences ou gradients obtenue sur les couples de points C et D d'une part, C2 et D1 d'autre part.

Par ailleurs, des additionneurs IPN1A-5 sont suivis de diviseurs par trois IPN1A-6 puis de soustracteurs IPN1A-7 et enfin de formateurs de valeur absolue IPN1A-8, pour fournir deux signaux DELTA4 et DELTA5. Ceux-ci représentent respectivement :
- pour le premier la moyenne des différences ou gradients relevées sur les couples de points C et D, C1 et D2 et D1 et C2,
- pour le second la moyenne des différences ou gradients relevées sur les points C et D, C2 et D1, et D2 et C1.

Les signaux DELTA2 à DELTA5 sont appliqués à un détecteur de minimum IPN1A 9 qui fournit un signal DELTA.

La seconde partie IPN1B de l'interpolateur auxiliaire de premier niveau est illustrée sur la figure 13. Son schéma est semblable à celui de la figure 11. Les points pris à l'entrée sont les mêmes que pour la figure 11. Ces points sont appliqués à un circuit IPN1B-1 qui forme des combinaisons linéaires analogues à celles de la figure 11, mais portant sur des combinaisons linéaires plus étendues, à quatre coefficients de pondération a, b, c et d avec $a + b + c + d = 1$.

Ces quatre combinaisons linéaires sont appliquées à un multiplexeur sommateur IPN1B-3.

Par ailleurs, le signal DELTA ainsi que les trois signaux DELTA2 à DELTA5 dont il est le minimum sont appliqués à des comparateurs IPN1B-4 suivis d'une table de vérité IPN1B-5 qui commande le multiplexeur sommateur IPN1B-3 pour fournir en sortie une interpolation partielle spatiale de la manière suivante :

- si DELTA2 est minimum, $aC1 + bC + cD + dD2$
- si DELTA3 est minimum, $aC + bC2 + cD1 + dD$

Dans les deux autres cas, on prend seulement deux coefficients a et b avec $a + b = 1$. Les interpolations sont :

- si le minimum est DELTA4, $aC1 + bD2$
- si le minimum est DELTA5, $aC2 + bD1$.

Dans le cas où il subsisterait encore un conflit de minimum, on peut réaliser une moyenne des interpolations déduites de tous les minima.

On considérera maintenant l'interpolateur de second niveau IPN2 de la figure 7, dont la structure, très simple, n'a pas été illustrée en détail. Lorsqu'il est validé, cet interpolateur a simplement à effectuer une interpolation de la forme $aC + bD$, avec $a + b = 1$.

On notera d'ailleurs que cette grandeur est déjà disponible à l'intérieur des circuits de la figure 11.

On considérera maintenant l'interpolateur de troisième niveau IPN3, dont la structure générale est semblable à celle de l'interpolateur partiel de premier niveau, et qui peut d'ailleurs être comme lui complété d'un interpolateur auxiliaire.

Il est estimé que le schéma détaillé relatif à l'interpolateur partiel de premier niveau permettra à l'homme de l'art d'établir celui de troisième niveau, dès lors que les fonctions requises sont définies. Ce sont donc seulement ces fonctions qui sont expliquées ci-après.

Il est rappelé que l'interpolation de troisième niveau est mise en oeuvre si le contour détecté est quasi-horizontal. Dans ce cas, on détermine une grandeur dmin3 qui est le minimum des différences d∅, d4 et d5. Les différences d∅ et d4 (figure 8) sont relatives aux couples de points C3 et D4 ainsi que C4 et D3, respectivement. La différence d5 est le minimum entre les différences d6 et d7 de la figure 8. On admet tout d'abord qu'une et une seule des grandeurs est minimale. Trois cas peuvent alors se présenter :

- si le minimum est d∅, on prend $IS = aC3 + bD4$,
- si le minimum est d4, on prend $IS = aC4 + bD3$,
- si le minimum est d5, on prend $IS = aC + bD$.

En cas de conflit (plus d'un minimum), on peut alors calculer une différence DELTA3A qui va être définie comme le minimum de trois grandeurs DELTA3∅, DELTA31, DELTA34 et DELTA35, elles-mêmes définies par les relations ci-après (où le signe valeur absolue n'a pas été porté pour simplifier) :

$$DELTA3∅ = 0,5(C3 + C1) - 0,5(D2 + D4)$$
$$DELTA31 = 0,5(C2 + C4) - 0,5(D3 + D1)$$
$$DELTA34 = 0,2(C3 + C1 + C + D1 + D3) - 0,2 - (C2 + C4 + D + D2 + D4)$$
$$DELTA35 = 0,2(C + C2 + C4 + D2 + D4) - 0,2 - (Cl + C3 + D + D1 + D3)$$

Les critères d'interpolation sont alors les suivants :

si DELTA3∅ est minimum, alors $IS = aC3 + bCl + cD2 + dD4$

si DELTA31 est minimum, alors $IS = aC2 + bC4 + cD3 + dD1$

Dans les deux relations qui précèdent, on a $a + b + c + d = 1$.

Pour ce cas, et pour les autres cas précédents faisant intervenir quatre paramètres a, b, c, d, on peut prendre soit $a = b = 1/2$ et $c = d = 0$, soit $a = b = c = d = 1/4$.

Si DELTA34 est minimum, alors $IS = aC3 + bD4$.

Si DELTA35 est minimum, alors $IS = aC4 + bD3$.

Dans ces deux derniers cas, on a $a + b = 1$ avec soit $a = 1$ et $b = 0$, soit $a = b = 1/2$.

Si un conflit de minimum subsiste avec ces grandeurs DELTA, on peut là encore réaliser la moyenne des interpolations déduites de tous les minima pour cette interpolation auxiliaire de troisième niveau.

Comme précédemment indiqué, des interpolations partielles sont réalisées de cette manière pour chacune des trois différences DT, DS, D∅1 et D∅2 décrites plus haut.

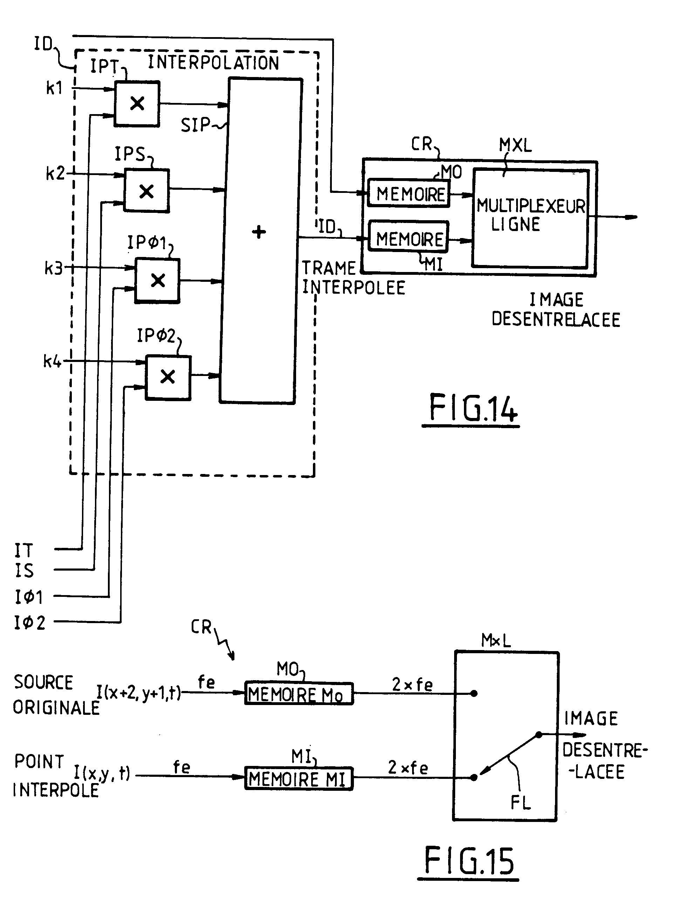

On obtient de la sorte des interpolations partielles correspondantes IS, IT, I∅1 et I∅2 qui vont (figure 14) comme premières entrées de multiplicateurs IPT, IPS, IP∅1 et IP∅2, lesquelles reçoivent comme facteurs multiplicateurs de pondération les coefficients k1 à k4 déjà décrits. Un circuit SIP fournit l'interpolation définitive du point P.

Les signaux ainsi obtenus pour les différents points interpolés d'une trame sont appliqués à une mémoire d'interpolation MI. Les signaux issus de la mémoire de trame MT1 (figure 3) sont appliqués à une mémoire de points originaux MO. Un circuit XML réalise alors la réunion pour la même trame des lignes constituées de points originaux et des lignes constituées de points interpolés.

Le schéma détaillé de la figure 15 le montre mieux : les mémoires MO et MI fournissent des signaux de sortie au double de la fréquence d'échantillonnage des points de lignes, et ce aux deux entrées du multiplexeur. Celui-ci est simplement constitué d'un commutateur opérant à la cadence de la fréquence ligne, et en synchronisme avec les lignes, de manière à fournir en sortie un signal complet relatif à une image désentrelacée obtenue par synthèse des lignes d'origine et des lignes interpolées.

L'homme de l'art aura compris que le fonctionnement du dispositif selon l'invention a été décrit pour un seul point à interpoler.

Le fonctionnement séquentiel s'obtient en répétant toutes ces opérations, en augmentant à chaque fois l'abscisse x du point à interpoler, jusqu'à arriver en fin de ligne, puis en augmentant de deux unités son ordonnée, tout en ramenant son abscisse à zéro, pour commencer l'interpolation de la ligne suivante.

Des premières expériences ont été effectuées en utilisant le moyen d'interpolation hiérarchique de la présente invention, mais seulement pour deux différences ou gradients d'entrée, à savoir DT et DS. La fenêtre d'interpolation hiérarchique intéressait deux lignes et cinq points, de la manière décrite en détail ci-dessus, c'est-à-dire que l'on prend deux points auxiliaires d'un côté de chaque point principal et deux points auxilaires de l'autre côté du même point principal, en ne considérant que des couples de points auxiliaires situés dans les lignes adjacentes de part et d'autre aux points à interpoler.

La qualité d'image ainsi obtenue s'est avérée supérieure à tout ce que l'on savait obtenir par l'une des techniques suivantes :

- filtrage linéaire passe-bas avec une ouverture verticale de 11 lignes d'image et une ouverture temporelle de 7 trames, tel que décrit dans l'article de B. CHOQUET intitulé "Inventaire des techniques de traitement d'images en conversion de normes de représentation pour la télévision haute définition" déjà cité,

- détection de mouvement tenant compte de ce gradient DT et DS, avec interpolation soit sur une fenêtre de deux lignes et trois points, soit sur une fenêtre de deux lignes et cinq points, avec ou sans pondération de l'interpolation.

Les quelques défauts résiduels observés en appliquant l'interpolation hiérarchique selon l'invention de la manière évoquée ci-dessus étaient de nature ponctuelle, produisant donc des erreurs limitées à un point d'image, et de nature aléatoire, donc possédant des coordonnées spatiales quelconques et différentes d'une image à l'autre. Il s'agit donc de défauts très peu visibles et peu gênants dans une séquence d'images mobiles.

Des secondes expériences ont été menées en utilisant à la fois l'interpolation hiérarchique de la présente invention et la détection de mouvements multigradients, c'est-à-dire avec les quatre différences DT, DS, D∅1 et D∅2.

On obtient ainsi une excellente définition de l'image désentrelacée, notamment grâce aux possibilités d'interpolation dans des directions spatio-temporelles diagonales. Cette technique a permis d'obtenir des images désentrelacées sans aucun défaut visible.

**Revendications**

1. Procédé de traitement de signaux d'image à balayage de trame entrelacé,
   comprenant les étapes suivantes :
   a) sélectionner un couple temporel (A,B) et un couple spatial (C,D) de points principaux en relation avec un point désiré (P) d'une ligne à interpoler dans une trame en cours d'interpolation, les points principaux (A,B) dudit couple temporel étant dans la même position sur l'image que le point désiré, mais situés dans les deux trames encadrant dans le temps la trame en cours d'interpolation, tandis que les points principaux (C,D) du couple spatial sont dans la trame en cours d'interpolation, mais dans les deux positions verticalement adjacentes à celle du point désiré (P), respectivement,
   b) calculer la différence principale dite temporelle (DT) entre les signaux des deux points du couple temporel, ainsi que la différence principale dite spatiale (DS) entre les signaux des deux points du couple spatial,
   c) choisir une fonction d'interpolation compte tenu de ces différences principales (DT,DS), et
   d) calculer le signal interpolé du point désiré (P) à l'aide de cette fonction d'interpolation,
   caractérisé
   en ce que l'étape c) comprend, pour chaque couple de points principaux (A,B; C,D):
   c1) la sélection de points auxiliaires (A1,A2,A3,A4,B1,B2,B3,B4) situés sur la même ligne d'image que les points principaux (A;B) et propres à définir des couples auxiliaires (Ai,Bi) de points encadrant le point désiré (P), en même temps qu'une zone spatio-temporelle entourant le point désiré et comprenant les deux points principaux (A,B) et les points auxiliaires (Ai,Bi) associés à ces deux points principaux,

c2) le calcul de différences auxiliaires (d0,d1,d3,d4) entre les signaux des deux points de chaque couple auxiliaire,

c3) la détermination d'une interpolation partielle de premier niveau (IPN1) dans la direction de celui parmi le couple principal et les couples auxiliaires associés qui donne une différence minimale,

c4) la détermination d'une interpolation partielle de second niveau (IPN2) dans la direction du couple de points principaux concerné,

en ce que l'étape d) comprend :

d1) pour chaque couple de points principaux, la sélection hiérarchique (IP12 ou CLG) entre l'interpolation partielle de premier niveau et celle de second niveau, en fonction du fait que ladite zone ne contient pas ou contient un contour local horizontal, et

d2) le calcul (ID) de la luminance interpolée définitive du point désiré à partir d'interpolations partielles relatives à chacun des couples de points principaux.

2. Procédé selon la revendication 1, caractérisé en ce que, en présence de plusieurs couples de points donnant la même différence minimale, l'étape c3) comprend la recherche de minimas de combinaisons linéaires normées desdites différences (DELTAi), et la réalisation de l'interpolation partielle de premier niveau (IPN1A,IPN1B) à partir de celle de ces combinaisons linéaires normées qui est minimale.

3. Procédé selon l'une des revendications 1 et 2, caractérisé en ce que :

- l'opération c1) comprend la sélection de deux points auxiliaires (Al,A3) d'un côté de chaque point principal (A), et de deux autres points auxiliaires (A2,A4) de l'autre côté de chaque point principal (A = ), tous sur la même ligne d'image que lui,

et en ce que l'étape c) comprend en outre l'opération suivante :

c5) détermination d'une interpolation partielle de troisième niveau, dans la direction du couple de points auxiliaires les plus éloignés l'un de l'autre (A3-B4, A4-B3) qui donne lieu à une différence minimale,

et en ce que l'opération d1) comprend, pour chaque couple de points principaux, la sélection entre l'interpolation partielle de premier niveau (IPN1), celle de second niveau (IPN2), et celle de troisième niveau (IPN3) en fonction du fait que ladite zone ne contient pas de contour horizontal ou sensiblement horizontal, contient un contour horizontal ou contient un contour quasi-horizontal, respectivement.

4. Procédé selon l'une des revendications 1 à 3, caractérisé en ce que, à l'opération d1), la détection de présence d'un contour local dans ladite zone s'effectue par recherche du minimum parmi des différences (d1-d3) ou des combinaisons linéaires normées de différences (d6,d7).

5. Procédé selon la revendication 4, caractérisé en ce que l'opération d1) comprend la recherche du minimum parmi la différence principale (d2), les deux différences auxiliaires (d1,d3) relatives aux points auxiliaires immédiatement adjacents aux points principaux, et au moins une différence croisée normée (d6,d7) relative à des points auxiliaires, l'interpolation partielle de premier niveau étant retenue, sauf si c'est une différence croisée qui est minimale.

6. Procédé selon la revendication 5, prise en combinaison avec la revendication 3, caractérisé en ce que l'opération d1) comprend en outre la comparaison d'une combinaison linéaire normée additive de différences (d10) à une valeur de référence, et la sélection entre les interpolations partielles de second et troisième niveau en fonction de cette comparaison.

7. Procédé selon l'une des revendications 1 à 6, caractérisé en ce que l'opération d2) comprend la recombinaison pondérée (ID) des interpolations partielles effectuée pour chaque couple de points principaux, en fonction de l'amplitude de la différence principale associée (DS,DT,D01,D02) à la somme des différences principales (SD).

8. Procédé selon l'une des revendications 1 à 7, caractérisé en ce qu'il comporte en outre l'étape suivante :

e) réunir (CR) chaque trame initiale et la trame de points interpolés correspondante, pour obtenir une image désentrelacée.

9. Procédé de traitement de signaux d'image à balayage de trame entrelacé, comprenant les étapes suivantes :

a) sélectionner un couple temporel (A,B) et un couple spatial (C,D) de points principaux en relation avec un point désiré (P) d'une ligne à interpoler dans une trame en cours d'interpolation, les points principaux (A,B) dudit couple temporel étant dans la même position sur l'image que le point désiré, mais situés dans les deux trames encadrant dans le temps la trame en cours d'interpolation, tandis que les points principaux (C,D) du couple spatial sont dans la trame en cours d'interpolation, mais dans les deux positions verticalement adjacentes à celle du point désiré (P), respectivement,

b) calculer la différence principale dite temporelle (DT) entre les signaux des deux points du couple temporel, ainsi que la différence principale dite spatiale (DS) entre les signaux des deux points du couple spatial.

c) choisir une fonction d'interpolation compte tenu de ces différences principales (DT,DS), et

d) calculer le signal interpolé du point désiré (P) à l'aide de cette fonction d'interpolation,

caractérisé en ce que :

l'étape a) comprend la sélection de deux couples dits spatiotemporels (E,H; F,G) comprenant chacun deux points supplémentaires encadrant le point désiré, chacun de ces points principaux supplémentaires étant situé dans la même trame et sur la même verticale que l'un desdits points principaux temporels, mais sur une ligne d'image adjacente à celle de ce point principal temporel,

l'étape b) comprend le calcul de deux différences principales spatio-temporelles (D∅1, D∅2) avec ces deux couples de points principaux supplémentaires, et

en ce que les étapes c) et d) sont mises en oeuvre sélectivement pour ces deux différences principales supplémentaires.

10. Dispositif de traitement de signaux d'image à balayage de trame entrelacé, comportant :

- une entrée (EV) de signaux d'image séquentiels, fournissant à chaque fois un signal relatif à un point nouveau d'abscisse (x + 2) situé sur une ligne déterminée (y + 2) de la trame incidente (t + 1),

- des moyens de mémoire (MT,ML) de signaux d'entrée successifs, par trames et par lignes, pour définir une fenêtre spatio-temporelle autour d'un point désiré (P) d'abscisse (x) d'une ligne à interpoler (y) dans une trame en cours d'interpolation (t) précédant la trame incidente, ces mémoires fournissant simultanément en sortie un couple temporel de points principaux (A,B) qui sont dans la même position que le point désiré, mais dans les trames qui suivent et précèdent la trame en cours d'interpolation, respectivement, et un couple spatial de points principaux (C,D) qui sont dans la trame en cours d'interpolation, mais dans les deux positions verticalement adjacentes au point désiré, respectivement,

- de premiers moyens de traitement (IPi) pour établir des interpolations provisoires du point désiré à partir des sorties des mémoires, et

- de seconds moyens de traitement travaillant également à partir des sorties des mémoires pour établir l'interpolation définitive du point désiré (P) à partir des interpolations provisoires, à l'aide de différences (DT,DS,D∅1,D∅2) entre les points principaux desdits couples temporels et spatiaux,

caractérisé en ce que les moyens de mémoire sont étendus pour fournir, en correspondance de chaque point principal (A,B,C,D), au moins deux points auxiliaires (A1,A2,...) situés sur la même ligne d'image que lui et l'encadrant,

en ce que, pour chaque couple de points principaux (A,B; C,D), les premiers moyens de traitement sont agencés pour :

. déterminer des différences auxiliaires (dl,d3) sur des couples de points auxiliaires associés à ces points principaux et encadrant le point désiré dans l'espace-temps,

. calculer une interpolation partielle de premier niveau (IPN1) dans la direction de celui parmi le couple principal et les couples auxiliaires associés qui donne une différence minimale (dmin),

. calculer une interpolation partielle de second niveau (IPN2) dans la direction du couple de points principaux concernés,

en ce que les seconds moyens de traitement réalisent, pour chaque couple de points principaux, une interpolation partielle obtenue par la sélection hiérarchique entre l'interpolation de premier niveau et celle de second niveau, en fonction d'une recherche du minimum parmi des différences (d1,d2,d3) ou des combinaisons linéaires normées de différences (d6,d7) intéressant ce couple de points principaux et les points auxiliaires associés, et

pour les différents couples de points principaux, la recombinaison pondérée (ID) des interpolations partielles sélectionnées, la pondération s'effectuant à chaque fois en fonction de l'amplitude de la différence principale concernée relativement à la somme des différences principales.

11. Dispositif selon la revendication 10, caractérisé en ce que, en présence de plusieurs couples de points donnant la même différence minimale, les premiers moyens de traitement recherchent le minimum de combinaisons linéaires normées (DELTAi) desdites différences, et réalisent l'interpolation partielle de premier niveau à partir de celle de ces combinaisons linéaires normées qui est minimale.

12. Dispositif selon l'une des revendications 10 et 11, caractérisé en ce que les seconds moyens de traitement recherchent le minimum parmi la différence principale (d2), les deux différences auxiliaires (d1,d3) relatives aux points auxiliaires adjacents aux points principaux, et au moins une différence croisée normée (d6,d7) relative à des points auxiliaires, l'interpolation partielle de premier niveau étant retenue, sauf si c'est une différence croisée qui est minimale.

13. Dispositif selon l'une des revendications 10 à 12, caractérisé en ce que les moyens de mémoire fournissent au moins deux points auxiliaires (A1,A3,A2,A4,...) de chaque côté de chaque point principal (A,...), et sur la même ligne d'image que lui,
en ce que les premiers moyens de traitement calculent également une interpolation partielle de troisième niveau, dans la direction du couple de points auxiliaires les plus éloignés l'un de l'autre qui donne lieu à une différence minimale (A3,B4; A4,B3),
et en ce que les seconds moyens de traitement réalisent, pour chaque couple de points principaux, la sélection entre l'interpolation partielle de premier niveau et celles de second et troisième niveau en fonction de ladite recherche de minimum, ainsi que la comparaison d'une combinaison linéaire normée additive de différences (d10) à une valeur de référence, et la sélection entre les interpolations partielles de second et troisième niveau en fonction de cette comparaison.

14. Dispositif selon l'une des revendications 10 à 13, caractérisé en ce que chaque interpolation partielle est la moyenne pondérée des deux points ou groupes de points sur lesquels s'effectue cette interpolation (a.C + b.D...).

15. Dispositif selon la revendication 14, caractérisé en ce que chaque interpolation partielle est la recopie de l'un des deux points ou groupes de points considérés (a = 1,b = 0).

16. Dispositif selon la revendication 14, caractérisé en ce que chaque interpolation partielle est la demi-somme des signaux des deux points ou groupes de points considérés (a = b = 1/2).

17. Dispositif selon la revendication 14, caractérisé en ce qu'il comporte des moyens pour établir le mode de pondération de la moyenne d'une manière commune pour toutes les interpolations partielles.

18. Dispositif selon l'une des revendications 10 à 17, caractérisé en ce qu'il comporte des moyens de mémoire et de commutation (CR) pour reconstituer une image désentrelacée à partir de la trame en cours d'interpolation et de la suite des lignes interpolées qui l'intèressent.

19. Dispositif de traitement de signaux d'image à balayage de trame entrelacé, comportant :
   - une entrée (EV) de signaux d'image séquentiels, fournissant à chaque fois un signal relatif à un point nouveau d'abscisse (x + 2) situé sur une ligne déterminée (y + 2) de la trame incidente (t + 1),
   - des moyens de mémoire (MT,ML) de signaux d'entrée successifs, par trames et par lignes, pour définir une fenêtre spatiotemporelle autour d'un point désiré (P) d'abscisse (x) d'une ligne à interpoler (y) dans une trame en cours d'interpolation (t) précédant la trame incidente, ces mémoires fournissant simultanément en sortie un couple temporel de points principaux (A,B) qui sont dans la même position que le point désiré, mais dans les trames qui suivent et précèdent la trame en cours d'interpolation, respectivement, et un couple spatial de points principaux (C,D) qui sont dans la trame en cours d'interpolation, mais dans les deux positions verticalement adjacentes au point désiré, respectivement,
   - de premiers moyens de traitement (IPi) pour établir des interpolations provisoires du point désiré à partir des sorties des mémoires, et
   - de seconds moyens de traitement travaillant également à partir des sorties des mémoires pour établir l'interpolation définitive du point désiré (P) à partir des interpolations provisoires, à l'aide de différences (DT,DS,DØ1, DØ2) entre les points principaux desdits couples temporels et spatiaux,

caractérisé en ce que les moyens de mémoire fournissent deux couples dits spatio-temporels (E,H; F,G) comprenant chacun deux points principaux supplémentaires encadrant le point désiré, chacun de ces points principaux supplémentaires étant situé dans la même trame et sur la même verticale que l'un desdits points principaux temporels, mais sur une des lignes d'image adjacente à celle de ce point principal temporel,

en ce que les premiers moyens de traitement déterminent les différences spatio-temporelles entre les points principaux desdits couples spatio-temporels et calculent les interpolations provisoires séparément pour chacun des quatre couples de points principaux, (A,B; C,D; E,H; F,G),

en ce que les seconds moyens de traitement opèrent sur chacun des quatre couples de points principaux.

20. Dispositif selon la revendication 19, en combinaison avec l'une des revendications 10 à 18.

21. Procédé selon la revendication 9, en combinaison avec l'une des revendications 1 à 8.

**Claims**

1. Method for processing interlace-scanned image signals,

    which entails the following procedures :

    a. the selection of a main point temporal couple (A,B) and spatial couple (C,D) in relation to a desired point (P) of a line to be interpolated in a partially interlaced frame which is in the process of interpolation, the main points (A,B) of the said temporal couple being in the same position on the image as the desired point, but located in the two partially interlaced frames framing the patially interlaced frame which is in the process of being interpolated, whereas the main points (C,D) of the spatial couple will be in the partially interlaced frame which is in the process of being interpolated, but in vertically adjacent positions to the desired point (P) respectively,

    b. the calculation of the so called principal temporal difference (DT) between the signals from the two points of the temporal couple, as well as of the so called principal spatial difference (DS) between the signals of the two points of the spatial couple,

    c. the choice of an interpolation function, taking account of these principal differences (DT,DS) and

    d. the calculation of the interpolated signal from the desired point (P) using this interpolation function,

    characterised :

    by the fact that stage c) will include, for each of the principal point couples (A,B: C,D):

    c1) the selection of auxiliary points (A1,A2,A3,A4,B1,B2,B3,B4) located on the same line as the principal points (A;B), which may also be used to define the auxiliary couples of points surrounding the desired point (P), at the same time as defining a spatiotemporal zone surrounding the desired point and including the two principal points (A,B) and the auxiliary points (Ai,Bi) associated with these two principal points,

    c2) the calculation of auxiliary differences (d0,d1,d2,d3,d4) between the signals of the two points of each auxiliary couple,

    c3) the determination of a first level partial interpolation (IPN1) in the direction of that one pertaining to the principal couple and to the associated auxiliary couples which will give a minimum difference,

    c4) the determination of a second level partial interpolation (IPN2) in the direction of the principal points of the couple concerned,

    procedure d) entails :

    d1) for each couple of the principal points, the hierarchical selection (1P12 or CLG) between first level and second level partial interpolation, as a function of the fact that the said zone will or will not contain a local horizontal contour, and

    d2) the calculation (ID) of the definitive interpolated luminance of the desired point, from partial interpolations relating to each of the couples of the principal points.

2. Procedure as for Claim 1, characterised by the fact that, in the presence of several couples of points giving the same minimum difference, procedure c3) will include seeking the smallest standardised linear combinations of the said differences (DELTAi), and the accomplishment of partial first level interpolation (IPN1A, IPN1B) from that of these minimum standardised linear combinations.

3. Procedures in accordance with Claims 1 and 2, characterised by the fact that:

    - operation c1) includes the selection of two auxiliary points (A1,A3) of one side of each principal point (A), and of two other auxiliary points (A2,A4) of the other side of each principal point (A=), all on the same image line as itself,

furthermore, procedure c) entails the following operation :

c5) the determination of a third level partial interpolation, in the direction of the auxiliary points couple which are furthest away from each other (A3-B4, 14-B3) which will give a minimum difference

furthermore, operation d) includes, for each couple of the principal points, the selection between first level (IPN1), second level (IPN2) and third level (IPN3) partial interpolation as a function of the fact that the said zone does not contain a horizontal or almost horizontal contour, but will contain a horizontal contour or a quasi-horizontal contour respectively.

4. Procedure in accordance with one of Claims 1 to 3 characterised by the fact that, at the time of operation d1), the detection of the presence of a local contour in the said zone shall be effected by finding the minimum of the standardised linear differences (d1-d3) or combinations of the differences (d6,d7).

5. Procedure in accordance with Claim 4, characterised by the fact that operation d1) includes finding, from the principal difference, the minimum of the two auxiliary differences (d1,d3) relating to the auxiliary points immediately adjacent to the principal points, and at least one standardised crossed difference (d6,d7) relating to auxiliary points, the first level partial interpolation being taken, unless it is found to be a minimum crossed reference.

6. Procedure in accordance with Claim 5, together with Claim 3, characterised by the fact that operation d1) also includes a comparison of a standardised additive linear combination of differences (d10) to a reference value, and the selection between second and third level interpolations as a function of this comparison.

7. Procedure in accordance with one of Claims 1 to 6, characterised by the fact that operation d2) includes weighted recombination (ID) of the partial interpolations effected for each couple of principal points, as a function of the size of the principal difference (DA,DT,D01,D02) associated with the sum of the principal differences (SD).

8. Procedure in accordance with one of Claims 1 to 7, but including the following procedure :

e) the uniting (CR) of each initial partially interlaced frame and the partially interlaced frame of corresponding interpolated points, to obtain a non interlaced image.

9. Procedure for processing interlace-scanned image signals, following the following procedures :

a. the selection of a temporal couple (A,B) and a spatial couple (C,D) of the principal points in relation to a desired point (P) of a line to be interpolated in a partially interlaced frame which is in the process of being interpolated, the principal points (A,B) of the said temporal couple being in the same position on the image as the desired point, but located in the two interlaced images framing the interlaced image which is in the process of being interpolated, whereas the principal points (C,D) of the spacial couple are in the interlaced image which is in the process of being interpolated, but in the two positions vertically adjacent to that of the desired point (P) respectively.

b. the calculation of the so called principal temporal difference (DT) between the signals of the two points of the temporal couple, as well as the so called principal spatial difference (DS) between the signals of the two points of the spatial couple.

c. the choice of an interpolation function of the desired point (P), taking account of these principal differences (DT,DS), and

d. the calculation of the interpolated signal of the desired point (P) using this interpolation function,

characterised by the fact that:

procedure a) includes the selection of two so called spatiotemporal coupes (EH,FG) each of which includes two supplementary points framing the desired point, each of these supplementary points being located in the same partially interlaced frame and on the same vertical as one of the said principal temporal points, but on an image line adjacent to that of this principal temporal point,

procedure b) includes the calculation of two principal spacio-temporal differences (D01, D02) with two supplementary couple points, and

the effecting of procedures c) and d) selectively for these two supplementary principal differences.

10. Interlace-scanned image signal processing device, including :

- a signal input for (EV) for sequential images, each time supplying a signal relating to a new abscissa point (x + 2) located on a determined line (y + 2) of the malfunctioning interlaced image (t + 1),

- a memory (MT,ML) to store successive input signals, for each interlaced image and for each line, in order to define a spacio-temporal window around a desired abscissa point (P) of a line to be interpolated (y) in a partially interlace frame in the process of being interpolated, preceding the malfunctioning partially interlaced frame, the output of these memories simultaneously supplying a temporal couple of the principal points (A,B) which are in the same position as the desired point, but in the partially interlaced frames which follow and precede the partially interlaced frame in the process of being interpolated, respectively, and a spatial couple of the principal points (C,D) which are in the partially interlaced frame being interpolated, but in the two positions vertically adjacent to the desired point respectively,

- initial processing methods (IPi) in order to establish provisional interpolations of the desired point based on output from the memory, and

- secondary processing methods which also work from memory output, to establish definitive interpolation of the desired point (P) based on provisional interpolations, together with the help of the differences (DT,DS,D01,D02) between the principal points of the said temporal and spatial couples,

characterised, by the fact that the methods employed with regard to the memory include, corresponding to each principal point (A,B,C,D), at least two auxiliary points (1,A2,...) located on the same image line as itself and framing it :

and also characterised by the fact that for each principal points couple (A-B;C-D) the initial methods of processing are designed to :

- determine the auxiliary differences (d1,d3) on the auxiliary point couples associated with these principal points and framing the desired point in the space-time,

- calculate a first level partial interpolation (IPN1) in the direction of the couple from the associated principal couple and the auxiliary couples which give a minimal difference (d min),

- calculate a second level partial interpolation (IPN2) in the direction of the principal points couple concerned,

the secondary methods of processing will produce a partial interpolation obtained from the hierarchical selection between first level and second level interpolation for each principal points couple, as a function of the obtaining of a minimum from differences d1, d2 and d3 or from the standardised linear combinations (d6, d7) of these principal points couples and the associated auxiliary points, and

for the different principal points couples, the weighted recombination (ID) of selected partial interpolations, the weighting is always selected as a function of the size of the principal difference concerned in relation to the sum of the principal differences.

11. Device in accordance with Claim 10, characterised by the fact that, given that the presence of several points couples giving the same minimum difference, the initial processing methods will obtain the minimum standardised linear combinations (DELTAi) of the said differences, and will effect first level partial interpolation based on that of the standardised linear combinations which is found to be the minimum.

12. Device in accordance with one of Claims 10 and 11, characterised by the fact that the secondary processing methods will obtain the minimum from amongst the principal difference (d2), the two auxiliary differences (d1,d3) relating to auxiliary pints adjacent to principal points, and at least one cross referenced standardised difference (d6, d7) relating to auxiliary points, the first level partial interpolation being used, unless there is a minimum crossed difference.

13. Device in accordance with one of Claims 10 to 12, characterised by the fact that the memory functions will supply at least two auxiliary points (A1, A3, A2, A4,...) for each side of each principal point (A,...) and on the same image line as itself,

and also characterised by the fact that the processing methods will also calculate a third level partial interpolation, in the direction of the auxiliary points couple which is the furthest away from the other which will produce a minimum difference (A3-B4; A4-B3),

and also characterised by the fact that the secondary processing methods, will obtain a selection between first, second and third level partial interpolation for each principal points couple, as a function of the said obtaining of a minimum, as well as the comparison of a standardised additive linear combination of differences (d10) to a reference value for each principal points couple, and the selection between the second and third interpolations as a function of this comparison.

14. Device in accordance with Claims 10 to 13 characterised by the fact that each partial interpolation is the weighted average of two points or groups of points on which this interpolation will be effected (a.C + b.D...).

15. Device in accordance with Claim 14, characterised by the fact that each partial interpolation is a copy of one of the two points or groups of points considered (a = 1,b = 0).

16. Device in accordance with Claim 14, characterised by the fact that partial interpolation is the half-sum of the signals of the two points or groups of points considered (a = b = 1/2).

17. Device in accordance with Claim 14, characterised by the fact that it includes means of establishing the method of weighting the average by a common method for all partial interpolations.

18. Device in accordance with one of Claims 10 to 17, characterised by the fact that it includes memory and methods of commutation (CR) for reconstituting a non interlaced image from the partially interlaced frame in the process of being interpolated and from the relevant interpolated lines.

19. Device for processing interlace-scanned image signals, including :
    - a signal input (EV) for sequential images, which will, each time, produce a signal relating to a new abscissa point (x + 2) located on a determined line (y + 2) on the partially interlaced frame in question (t + 1),
    - memory (MT,ML) for successive image signals, per interlaced image and per line, in order to define a spatiotemporal window around a desired abscissa (x) point (P) on a line to be interpolated (y) in a partially interlaced frame which is in the process of being interpolated (t) preceding the partially interlaced image frame in question, the output of these memories supplying a temporal couple of the principal points 9A,B) which are in the same position as the desired point, but in the partially interlaced frames which precede and follow the partially interlaced image frame which is being interpolated, respectively, and a spacial couple of the principal points (C,D) which are in the partially interlaced frame being interpolated, but in the two positions vertically adjacent to the desired point respectively,
    - initial processing methods (IPi) in order to establish temporary interpolation at the desired point from memory output, and
    - secondary methods of processing working also from memory output in order to establish definitive interpolation at the desired point (P) from temporary interpolation, with the assistance of the differences (DT,DS,D01,D02) between the principal points of the said temporal and spacial couples,

characterised by the fact that the memory will supply two so-called spatiotemporal couples (E,H,F,G) each including two supplementary principal points framing the desired point, each of these supplementary principal points being located in the same partially interlaced frame and on the same vertical as one of the said principal temporal points, but on one of the image lines adjacent to that of the principal temporal point,

characterised also by the fact that the initial processing methods will determine the spatiotemporal differences between the principal points of the said spatiotemporal couples and calculate the temporary interpolations separately for each of the four couple of the principal points, (A-B; C-D; E-H; F-G),

characterised also by the fact that the secondary processing methods will operate on each of the four principal point couples.

20. Device in accordance with claim 19, in combination with one of claims 10 to 18.

21. Procedure in accordance with claim 9, in combination with one of claims 1 to 8.

**Patentansprüche**

1. Verfahren zur Verarbeitung von Bildsignalen mit Zeilensprungabtastung, folgende Stufen umfassend:
    a) Auswahl eines zeitlichen Paares (A,B), und eines räumlichen Paares (C,D) von, im Verhältnis zu einem gewünschten Punkt (P) stehender Hauptpunkte einer, in ein interpolierendes Raster zu interpolierenden Zeile. Die besagten zeitlichen Hauptpunkte (A,B), befindlich im Bild in gleicher Position wie der gewünschte Punkt (P), jedoch in den beiden, das interpolierende Raster umrahmenden Rastern, während sich die Hauptpunkte (C,D) des räumlichen Punktpaares in dem interpolierenden Raster, jedoch in zwei vertikal an den Punkt (P) angrenzenden Positionen befinden, beziehungsweise,

b) Berechnung der Hauptdifferenz, genannt zeitliche (DT), zwischen den Signalen der Punkte des zeitlichen Paares, sowie der Hauptdifferenz, genannt räumliche (DS), zwischen den Signalen der Punkte des räumlichen Paares,

c) Auswahl einer Interpolationsfunktion unter Berücksichtigung der Hauptdifferenzen (Dt,DS) und

d) Berechnung des interpolierten Signals am Punkt (P) mit Hilfe dieser Interpolationsfunktion, dadurch gekennzeichnet, daß die Stufe c), für jedes Paar der Hauptpunkte (AB;CD) umfaßt:

c1) die Auswahl von, auf gleicher Bildzeile wie die Hauptpunkte (A;B) liegender Hilfspunkte (A1,A2,A3,A4,B1,B2,B3,B4), geeignet, den gewünschten Punkt (P) umgebende Hilfspunkte (A1,B1) und gleichzeitig eine räumlich-zeitliche Zone um den gewünschten Punkt und die beiden Hauptpunkte (A,B) sowie den diesen zugeordneten Hilfspunkten (Ai,Bi) zu bilden,

c2) Berechnung der Hilfsdifferenzen (d0,d1,d2,d3,d4) zwischen den Signalen beider Punkte jedes Hilfspaares,

c3) Bestimmung einer anteiligen Interpolation auf erster Ebene (IPN1), in Richtung der Hauptpaare und zugehöriger Hilfspaare, die eine minimale Differenz ergeben,

c4) Bestimmung einer anteiligen Interpolation auf zweiter Ebene (IPN2) in Richtung der betroffenen Hauptpunkte,

dadurch gekennzeichnet, daß die Stufe d) umfaßt:

d1) für jedes Paar der Hauptpunkte, eine hierarchische Auswahl (IP12 oder CLG) der anteiligen Interpolation zwischen der ersten und der zweiten Ebene, davon abhängig, ob in besagter Zone ein örlicher horizontaler Umbruch vorhanden oder nicht vorhanden ist, und

d2) Berechnung (ID) der definitif interpolierten Leuchtstärke des gewünschten Punktes, ausgehend von anteiligen Interpolationen zugehörig zu jedem Paar der Hauptpunkte.

2. Verfahren nach Anspruch 1, dadurch gekennzeichnet, daß es, bei Vorhandensein mehrerer Punkt-Paarungen die die gleiche minimale Differenz ergeben, die Stufe c3) die Suche nach der geringsten linearen Kombination (DELTAi), und die Ausführung der anteiligen Interpolation auf erster Stufe (IPN1A,IPN1B), ausgehend von der geringsten linearen Kombination, umfaßt.

3. Anspruch nach einem der Ansprüche 1 und 2, dadurch gekennzeichnet daß:

- der Vorgang c1) die Auswahl der zwei Hilfspunkte (A1,A3) beiderseits jedes Hauptpunktes (A), und der zwei anderen Hilfspunkte (A2,A4) auf der anderen Seite jedes Hauptpunktes (A=), alle auf derselben Bildzeile liegend, umfaßt,

und dadurch gekennzeichnet, daß die Stufe c) unter anderem folgenden Vorgang umfaßt:

c5) Auswahl einer anteiligen Interpolation auf dritter Ebene, in Richtung der voneinander am weitesten entfernten Hilfspunktpaare (A3-B4, A4-B4), welche die minimalste Differenz ergeben,

und dadurch gekennzeichnet, daß der Vorgang d1), für jedes Paar der Hauptpunkte, die Auswahl zwischen einer anteiligen Interpolation auf erster (IPN1), zweiter (IPN2), und dritter (IPN3) Ebene, in Abhängigkeit davon, ob besagte Zone keinen horizontalen oder nahezu horizontalen Umbruch, beziehungsweise einen horizontalen oder fast horizontalen Umbruch umfasst.

4. Verfahren nach einem der Ansprüche 1 bis 3 dadurch gekennzeichnet, daß der Vorgang d1) der Suche eines örtlichen Umbruchs in der besagten Zone durch suchen des minimums unter den Differenzen (d1-d3) oder der linearen Kombinationen der Differenzen (d6,d7) erfolgt.

5. Verfahren nach Anspruch 4, dadurch gekennzeichnet, daß der Vorgang d1) die Suche nach dem Minimum der Hauptdifferenz (d2), den beiden Hilfsdifferenzen (d1,d3) zugehörig zu den unmittelbar an die Hauptpunkte angrenzenden Hilfspunkten, und mindestens einer, sich auf die Hilfspunkte beziehender gekreuzten Differenz (d6,d7), umfaßt, während die anteilige Interpolation der ersten Ebene zurückgehalten ist, außer es handelt um eine minimale gekreuzte Differenz.

6. Verfahren nach Anspruch 5, in Verbindung mit Anspruch 3, dadurch gekennzeichnet, daß der Vorgang d1) unter anderem den Vergleich einer linearen additiven Kombination der Differenzen (d10) mit einem Bezugswert, und die Wahl zwischen den anteiligen Interpolationen der zweiten und dritten Ebene in Abhängigkeit von diesem Vergleich, umfaßt.

7. Verfahren nach einem der Ansprüche 1 bis 6, dadurch gekennzeichnet, daß der Vorgang d2) für jedes der Hauptpunktpaare die Wiederherstellung ausgeglichener (ID) anteiliger Interpolationen, in Abhängigkeit der Amplitude der zugehörigen Hauptdifferenz (DS,DT,D01,D02) zur Summe der Hauptdifferenzen (SD) umfaßt.

8. Verfahren nach einem der Ansprüche 1 bis 7, dadurch gekennzeichnet das es unter anderem folgende Stufe umfaßt:

e) zusammenfassen (CR) jedes Anfangsrasters und entsprechenden Rasters mit interpolierten Punkten, um ein Bild ohne Zeilensprung zu erhalten.

9. Verfahren zur Bearbeitung von Bildsignalen mit Zeilensprungabtastung, folgende Stufen umfassend:

a) Auswahl eines zeitlichen Paares (A,B), und eines räumlichen Paares (C,D) von, im Verhältnis zu einem gewünschten Punkt (P) stehender Hauptpunkte einer, in ein interpolierendes Raster zu interpolierenden Zeile. Die besagten zeitlichen Hauptpunkte (A,B), befindlich im Bild in gleicher Position wie der gewünschte Punkt (P), jedoch in den beiden, das interpolierende Raster umrahmenden Rastern, während sich die Hauptpunkte (C,D) des räumlichen Punktpaares in dem interpolierenden Raster, jedoch in zwei vertikal an den Punkt (P) angrenzenden Positionen befinden, beziehungsweise,

b) Berechnung der Hauptdifferenz, genannt zeitliche (DT), zwischen den Signalen der Punkte des zeitlichen Paares, sowie der Hauptdifferenz, genannt räumliche (DS), zwischen den Signalen der Punkte des räumlichen Paares,

c) Auswahl einer Interpolationsfunktion unter Berücksichtigung der Hauptdifferenzen (Dt,DS) und

d) Berechnung des interpolierten Signals am Punkt (P) mit Hilfe dieser Interpolationsfunktion,

dadurch gekennzeichnet, daß:

die Stufe a) die Auswahl der zwei räumlichzeitlich genannten Paare (EH,FG) umfaßt, wobei jedes, zwei zusätzliche, den gewünschten Punkt einrahmende Punkte umfaßt, jeder dieser zusätzlichen Hauptpunkte im gleichen Raster und in der gleichen Vertikalen wie besagte zeitlichen Hauptpunkte, jedoch auf einer an diesen zeitlichen Hauptpunkt angrenzenden Bildzeile liegend,

die Stufe b) die Berechnung der beiden räumlichzeitlichen Hauptdifferenzen (D01,D02) mit seinen zusätzlichen Hauptpunkten umfaßt, und

dadurch gekennzeichnet, daß die Stufen c) und d) für diese zwei zusätzlichen Hauptdifferenzen selektiv eingesetzt werden.

10. Einrichtung zur Verarbeitung von Bildsignalen mit Zeilensprungabtastung, umfaßend:

- einen Eingang (EV) der Bildfolgesignale, jeweils ein Signal liefernd, bezogen auf einen neuen Punkt (Xt) der, auf einer bestimmten Linie (Y + 2) des eingeschobenen Rasters (t + 1) liegenden Abszisse,

- Vorrichtungen zum Speichern (MT,ML) der aufeinanderfolgenden Eingangssignale, pro Raster und pro Linie, zur Bestimmung eines, vor dem eingeschobenen liegenden, räumlichzeitlichen Fensters um den gewünschten Punkt (P) der Abszisse (X) einer zu interpolierenden Linie (Y) in ein im Einfügen befindliches Raster (t), diese Speicher liefern gleichzeitig als Ausgang ein, in gleicher Position wie der gewünschte Punkt befindliches, zeiliches Paar der Hauptpunkte (A,B), jedoch jeweils in den, dem im Einfügen befindlichen Raster, folgenden und vorausgehenden Rastern, beziehungsweise ein räumliches Paar der Hauptpunkte (C,D) welche sich in dem im Einfügen befindlichen Raster, jedoch in den beiden vertikal an den gewünschten Punkt angrenzenden Positionen befinden, beziehungsweise,

- erste Vorichtungen der Verarbeitung (IPi) zur Einrichtung provisorischer Interpolationen des gewünschten Punktes von den Ausgängen der Speicher ausgehend, und

- zweite Vorrichtungen der Verarbeitung, ebenfalls mit den Ausgängen der Speicher arbeitend, zur Einrichtung der definitiven Interpolation des gewünschten Punktes (P) ausgehend von der provisorischen Interpolation, mit Hilfe der Differenzen (DT,DS,D01,D02) zwischen den Hauptpunkten besagter zeitlicher und räumlicher Paare,

dadurch gekennzeichnet, daß die Speichervorrichtungen erweitert sind um, in Beziehung zu jedem Hauptpunkt (A,B,C,D), mindestens zwei auf gleicher Bildzeile mit dem Hauptpunkt liegende und denselben einschließende Hilfspunkte (A1,A2,...) zu liefern,

und dadurch gekennzeichnet, daß für jedes Paar der Hauptpunkte die Vorrichtungen zur Verarbeitung eingerichtet sind zur:

. Bestimmung der Hilfsdifferenzen (d1,d3) der den Paaren der Hauptpunkte zugeordneten, und den gewünschten Punkt rämlich-zeitlich umgrenzenden, Paaren der Hilfspunkte,

. Berechnung einer anteiligen Interpolation auf erster Ebene (IPN1) in Richtung des, die geringste Differenz (dmin) ergebenden Hauptpaares und zugehörigen Hilfspaares,

. Berechnung einer anteiligen Interpolation auf zweiter Ebene (IPN2) in Richtung der betroffenen Hauptpunkte,

dadurch gekennzeichnet, daß die zweiten Vorrichtungen zur Verarbeitung, für jedes Paar der Hauptpunkte eine, durch hierarchische Auswahl zwischen der Interpolation auf erster und zweiter Ebene erhaltene, anteilige Interpolation, abhängig vom Ergebniss der Suche des Minimums der Differenzen (d1,d2,d3,) oder der linearen Kombinationen der Differenzen (d6,d7) dieser Paare der Hauptpunkte und des zugehörigen Paares der Hilfspunkte, ergeben.

11. Einrichtung nach Anspruch 10, dadurch gekennzeichnet, daß, beim Vorhandensein mehrerer Punkte mit gleicher minimaler Differenz, die ersten Einrichtungen zur Verarbeitung das Minimum der linearen Kombinationen (DELTAi) besagter Differenzen suchen, und die anteilige Interpolation auf erster Ebene ausführen, ausgehend von der geringsten minimalen Differenz dieser linearen Konbinationen.

12. Einrichtung nach einem der Ansprüche 10 und 11, dadurch gekennzeichnet, daß die zweiten Vorrichtungen zur Verarbeitung, das Minimum unter den Hauptdifferenzen (d2), der beiden Hilfsdifferenzen (d1,d3) in Beziehung zu den an die Hauptpunkte grenzende Hilfspunkte stehend, und mindestens einer gekreuzten Differenz (d6,d7) in Beziehung zu den Hilfspunkten stehend, sucht, die anteilige Interpolation der ersten Stufe zurückhaltend, außer im Falle einer minimalen gekreuzten Differenz.

13. Einrichtung nach einem der Ansprüche 10 bis 12, dadurch gekennzeichnet, daß die Speichereinheiten mindestens zwei Hilfspunkte (A1,A3,A2,A4,...) beiderseits jedes Hauptpunktes (A,...) und auf gleicher Bildzeile mit demselben liegend, liefern,

dadurch gekennzeichnet, daß die ersten Vorrichtungen zur Verarbeitung ebenfalls eine Interpolation auf dritter Ebene berechnen, in Richtung des Paares mit den am weitesten von einander auseinanderliegenden Hilfspunkten welche eine minimale Differenz (A3,B4;A4,B3) ergeben,

und dadurch gekennzeichnet, daß die zweiten Vorrichtungen zur Verarbeitung, für jedes Paar der Hauptpunkte die Auswahl zwischen der anteiligen Interpolation der ersten, zweiten und dritten Stufe, in Abhängigkeit von der besagten Minimumsuche, sowie den Vergleich einer linearen addidiven Kombination der Differenz (d10) mit einem Bezugswert, und die Auswahl der anteiligen Interpolationen auf zweiter und dritter Stufe in Abhängigkeit von diesem Vergleich, vornehmen.

14. Einrichtung nach einem der Ansprüche 10 bis 13, dadurch gekennzeichnet, daß jede anteilige Interpolation der ausgeglichene Mittelwert von zwei Punkten oder Gruppen von Punkten auf welche sich diese Interpolation auswirkt (a.C + b.D...), ist.

15. Einrichtung nach Anspruch 14, dadurch gekennzeichnet, daß jede anteilige Interpolation eine Kopie eines der beiden berücksichtigten Punkte oder Gruppen von Punkten (a = 1,b = 0) ist.

16. Einrichtung nach Anspruch 14, dadurch gekennzeichnet, daß jede anteilige Interpolation die Hälfte der Summe der beiden berücksichtigten Punkte oder Gruppen von Punkten (a = b = 1/2) ist.

17. Einrichtung nach Anspruch 14, dadurch gekennzeichnet, daß sie Vorrichtungen zum Einrichten einer für alle anteiligen Interpolationen gültigen Methode eines Mittelwertausgleiches umfaßt.

18. Einrichtung nach einem der Ansprüche 10 bis 17, dadurch gekennzeichnet, daß sie Vorrichtungen der Speicherung und Umwandlung (CR) zur Wiederherstellung eines Bildes ohne Zeilensprung umfaßt, ausgehend von dem im Einfügen befindlichen Raster und der interpolierten interessierenden Zeilenfolge.

19. Einrichtung zur Verarbeitung von Bildsignalen mit Zeilensprungabtastung, umfaßend:
- einen Eingang (EV) der Bildfolgesignale, jeweils ein Signal liefernd, bezogen auf einen neuen Punkt (Xt) der, auf einer bestimmten Linie (Y + 2) des eingeschobenen Rasters (t + 1) liegenden Abszisse,
- Vorrichtungen zum Speichern (MT,ML) der aufeinanderfolgenden Eingangssignale, pro Raster und pro Linie, zur Bestimmung eines, vor dem eingeschobenen liegenden, räumlichzeitlichen Fensters um den gewünschten Punkt (P) der Abszisse (X) einer zu interpolierenden Linie (Y) in ein im Einfügen befindliches Raster (t), diese Speicher liefern gleichzeitig als Ausgang ein, in gleicher Position wie der gewünschte Punkt befindliches, zeiliches Paar der Hauptpunkte (A,B), jedoch jeweils in den, dem im Einfügen befindlichen Raster, folgenden und vorausgehenden Rastern, beziehungsweise ein räumliches Paar der Hauptpunkte (C,D) welche sich in dem im Einfügen befindlichen Raster, jedoch in den beiden vertikal an den gewünschten Punkt angrenzenden Positionen befinden, beziehungsweise,

- erste Vorrichtungen der Verarbeitung (IPi) zur Einrichtung provisorischer Interpolationen des gewünschten Punktes von den Ausgängen der Speicher ausgehend, und

- zweite Vorrichtungen der Verarbeitung, ebenfalls mit den Ausgängen der Speicher arbeitend, zur Einrichtung der definitiven Interpolation des gewünschten Punktes (P) ausgehend von der provisorischen Interpolation, mit Hilfe der Differenzen (DT,DS,D01,D02) zwischen den Hauptpunkten besagter zeilicher und räumlicher Paare,

dadurch gekennzeichnet, daß die Vorrichtungen zum Speichern zwei, räumlich-zeitlich genannte Paare (E,H,F,G) liefern, jede, zwei zusätzliche, den gewünschten Punkt einrahmenden Hauptpunkte umfaßend, jeder der zusätzlichen Hauptpunkte im selben Raster und auf selber Vertikalen wie einer der besagten zeitlichen Hauptpunkte befindlich, jedoch auf einer an die Bildzeile dieses zeitlichen Hauptpunktes angrenzenden Bildzeile,

dadurch gekennzeichnet, daß die ersten Vorrichtungen zur Verarbeitung die räumlich-zeitlichen Differenzen zwischen den Hauptpunkten bestimmen, und die provisorischen Interpolationen für jede der vier Hauptpunktepaare (A,B;C,D;E,H;F,G) getrennt berechnen,

dadurch gekennzeichnet, daß die zweiten Vorrichtungen auf jedes der vier Hauptpunktpaare einwirkt.

20. Einrichtung nach Anspruch 19, in Verbindung mit einem der Ansprüche 10 bis 18.

21. Einrichtung nach Anspruch 9, in Verbindung mit einem der Ansprüche 1 bis 8.

FIG.1A

FIG.1B

TRAME A INTERPOLER

ENTREE
VIDEO
(ENTRELACEE)

| MT | MEMOIRES DE TRAME | ML | MEMOIRES DE LIGNES | CG | CALCUL DES GRADIENTS | CPG | CALCUL DES POIDS DES GRADIENTS | ID | INTERPOLAT. DEFINITIVE | CR | UNION DE DEUX TRAMES |

SORTIE
VIDEO

IP1
INTERPOLATION PARTIELLE SUR UN GRADIENT

IP4
INTERPOLATION PARTIELLE SUR UN AUTRE GRADIENT

<u>FIG.2</u>

FIG.2A

FIG.2B

(D4)
I (x+2,y+1,t)
vers circuit CR (FIG.2)

MT2
MEMOIRE TRAME MT (t-1)    I(x+2,y+2,t-1)    (F4)

ML2
MEMOIRE LIGNES ML(t-1)

MT1
MEMOIRE TRAME MT (t)    I(x+2,y+1 , t)    (D4)

ML1
MEMOIRE LIGNES ML(t)

EV
(H4) I(x+2,y+2,t+1)

ML∅
MEMOIRE LIGNES ML(t+1)

I (x+2,y+2,t+1)
(H4)

EP 0 316 231 B1

FIG.3

$I(x+2,y+2,t+1)(H4)$ ──────────→ $I(x+2,y+2,t+1)(H4)$

R∅11

D ──→ $I(x+1,y+2,t+1)(H2)$

R∅12

D ──→ $I(x,y+2,t+1)(H)$

R∅13

D ──→ $I(x-1,y+2,t+1)(H1)$

R∅14

D ──→ $I(x-2,y+2,t+1)(H3)$

ML∅2

MEMOIRE LIGNE y ──→ $I(x+2,y,t+1)(B4)$

R∅21

D ──→ $I(x+1,y,t+1)(B2)$

R∅22

D ──→ $I(x,y,t+1)(B)$

R∅23

D ──→ $I(x-1,y,t+1)(B1)$

R∅24

D ──→ $I(x-2,y,t+1)(B3)$

ML∅3

MEMOIRE LIGNE y-2 ──→ $I(x+2,y-2,t+1)(G4)$

R∅31

D ──→ $I(x+1,y-2,t+1)(G2)$

R∅32

D ──→ $I(x,y-2,t+1)(G)$

R∅33

D ──→ $I(x-1,y,t+1)(G1)$

R∅34

D ──→ $I(x-2,y,t+1)(G3)$

## FIG.4

28

```
      Points                    Lignes                Points

------*------*------*------          y      ------*------*------*------
      x     x+1    x+2                              x     x+1    x+2

------*------*------*------         y+1     ------*------*------*------
      x     x+1    x+2                              x     x+1    x+2

------*------*------*------         y+2     ------*------*------*------
      x     x+1    x+2                              x     x+1    x+2

------*------*------*------         y+3     ------*------*------*------
      x     x+1    x+2                              x     x+1    x+2


         Image t                                    Image t+1
```

# FIG.4A

```
E3   E1 E   E2 E4                              G3 G1 G   G2 G4
--*----*--*---*---*--                         --*---*--*--*---*---
x-2 x-1  x  x+1 x+2                            x-2 x-1  x  x+1 x+2
y-2 y-2 y-2 y-2 y-2                            y-2 y-2 y-2 y-1 y-2
t-1 t-1 t-1 t-1 t-1                            t+1 t+1 t+1 t+1 t+1


                 C3   C1  C   C2 C4
                --*---*--*---*---*--
                x-2 x-1  x  x+1 x+2
                y-1 y-1 y-1 y-1 y-1
                 t   t   t   t   t


A3  A1  A   A2 A4                              B3  B1 B   B2 B4
--*---*--*---*---*--                          --*---*--*---*---*---
x-2 x-1  x  x+1 x+2                            x-2 x-1  x  x+1 x+2
 y   y   y   y   y           --*---             y   y   y   y   y
t-1 t-1 t-1 t-1 t-1             x              t+1 t+1 t+1 t+1 t+1
                               y
                               t

                 D3   D1  D   D2 D4
                --*---*--*---*---*--
                x-2 x-1  x  x+1 x+2
                y+1 y+1 y+1 y+1 y+1
                 t   t   t   t   t


F3  F1  F   F2 F4                              H3  H1  H   H2 H4
--*---*--*---*---*--                          --*---*--*---*---*---
x-2 x-1  x  x+1 x+2                            x-2 x-1  x  x+1 x+2
y+2 y+2 y+2 y+2 y+2                            y+2 y+2 y+2 y+2 y+2
t-1 t-1 t-1 t-1 t-1                            t+1 t+1 t+1 t+1 t+1
```

# FIG. 4 B

29

FIG.5

EP 0 316 231 B1

EP 0 316 231 B1

D∅2A  D∅2B

(H) I(x,y+2,t+1)

   −   ||   → D∅2

(B) I(x,y, t+1)

   D∅1A  D∅1B

(G) I(x,y−2,t+1)

   −   ||   → D∅1

(D) I(x,y+1,t)

   DSA  DSB

(C) I(x,y−1,t)

   −   ||   → DS

(F) I(x,y+2,t−1)

   DTA  DTB

(A) I(x,y,t−1)

   −   ||   → DT

(E) I(x,y−2,t−1)

SD

+  → SD

## FIG.6

FIG.7

EP 0 316 231 B1

EP 0 316 231 B1

IP(i)

| VRAI X X | FAUX VRAI X | FAUX FAUX VRAI | CLG |
|---|---|---|---|
| 1 NIVEAU | 2 NIVEAU | 3 NIVEAU | |

CDC

CONTOUR HORIZONTAL OU QUASI HORIZONTAL

NON

HORIZONTAL

QUASI HORIZONTAL

IPN1

INTERPOLATION 1 NIVEAU SUR ENVIRONNEMENT RESTREINT 2X3 POINTS

IPN2

INTERPOLATION VERTICALE 2 NIVEAU

IPN3

INTERPOLATION FAIBLE PENTE 3 NIVEAU SUR LES POINTS EXTREMES D'UN ENVIRONNEMENT 2X5 POINTS.

MIP

MULTIPLEXEUR.

## FIG.7A

FIG.8

FIG.9

IP13-1    IP13-2

(C1) I(x-1,y-1,t) →
(C) I(x,y-1,t) →          +
(C2) I(x+1,y-1,t) →
(D1) I(x-1,y+1,t) →
(D) I(x ,y+1,t) →         +
(D2) I(x+1,y+1,t) →

IP13-3

$\div 3$

IP13-4

$\left| \dfrac{C + C_1 + C_3}{3} - \dfrac{D + D_1 + D_3}{3} \right|$

d10

IP13-5

Ref →

COMPARATEUR
($< $ Ref)

V23N ↓

IP13-7

→ V2N

IP13-8

→ V3N

IP13-6

EP 0 316 231 B1

36

## FIG.10

EP 0 316 231 B1

FIG.11

FIG.12

FIG.13

ID

INTERPOLATION

IPT

k1 ×

SIP

CR MXL

MO

MEMOIRE

k2 IPS ×

ID

MEMOIRE MULTIPLEXEUR LIGNE

MI

k3 IPΦ1 ×

TRAME INTERPOLEE

IMAGE DESENTRELACEE

k4 IPΦ2 ×

+

FIG.14

IT
IS
IΦ1
IΦ2

CR MxL

MO

SOURCE ORIGINALE I(x+2,y+1,t) fe MEMOIRE Mo 2×fe

IMAGE

MI DESENTRE- -LACEE

POINT INTERPOLE I(x,y,t) fe MEMOIRE MI 2×fe FL

FIG.15